(19) **Europäisches Patentamt / European Patent Office / Office européen des brevets**

(11) **EP 4 412 329 A1**

(12) # EUROPEAN PATENT APPLICATION
published in accordance with Art. 153(4) EPC

(43) Date of publication:
**07.08.2024 Bulletin 2024/32**

(21) Application number: **22874280.5**

(22) Date of filing: **13.06.2022**

(51) International Patent Classification (IPC):
**H04W 64/00** (2009.01)

(52) Cooperative Patent Classification (CPC):
**H04W 64/00**

(86) International application number:
**PCT/CN2022/098340**

(87) International publication number:
**WO 2023/050883 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111159770**

(71) Applicant: **Datang Mobile Communications Equipment Co., Ltd.**
**Beijing 100085 (CN)**

(72) Inventors:
• **REN, Xiaotao**
  **Beijing 100085 (CN)**
• **DA, Ren**
  **Beijing 100085 (CN)**
• **REN, Bin**
  **Beijing 100085 (CN)**

(74) Representative: **Maiwald GmbH**
**Engineering**
**Elisenhof**
**Elisenstrasse 3**
**80335 München (DE)**

(54) **INFORMATION PROCESSING METHOD AND APPARATUS, AND LOCATION MANAGEMENT FUNCTION SERVER AND COMMUNICATION DEVICE**

(57)    Provided are information processing method and apparatus, location management function server and communications device. The information processing method includes: receiving timing related information transmitted by a communications device; and determining a position of UE based on the timing related information. The communications device is the UE or a network device; the network device comprises a base station or a TRP; and the timing related information comprises at least one of: first time information associated with a transmitting or receiving time instant of an uplink positioning reference signal; second time information associated with a transmitting or receiving time instant of a downlink positioning reference signal; third information associated with a TEG; timing adjustment information; fourth information associated with the timing adjustment information.

FIG. 3

**Description**

**CROSS-REFERENCE TO RELATED APPLICATION**

This application claims priority to Chinese Patent Application No. 202111159770.7 filed on September 30, 2021, which is incorporated hereby by reference in its entirety.

**TECHNICAL FIELD**

The present disclosure relates to the technical field of communications, and in particular, to an information processing method, an information processing apparatus, a location management function server and a communications device.

**BACKGROUND**

In related technologies, for the multiple (Multi) - round-trip time (Round-Trip Time, RTT) positioning method, in order to perform a measurement on a transmission and reception time difference of a terminal (User Equipment, UE) or a transmission and reception time difference of a base station (Next Generation Node B, gNB), it is required that a transmission and reception point (Transmission Reception Point, TRP) transmits a downlink positioning reference signal (DL-PRS), and the UE transmits a sounding reference signal for positioning (SRS-Pos), and the UE or the gNB may perform the measurement on relevant measurement quantities based on the DL-PRS and the SRS-Pos. Specifically, when calculating positioning time measurement quantities such as a transmission and reception time difference of the UE or a transmission and reception time difference of the gNB, it is assumed that time measurement is performed at a position of an antenna connector (Antenna Connector), but in practice, the time measurement of signals is performed at a position of a baseband unit. Thus, there will be a time measurement error, for both signal transmission and signal reception. This error is referred to as a transmission and reception timing error. Due to the transmission and reception timing error, measurement results of all time-based positioning measurement quantities, including the transmission and reception time difference of the UE or the transmission and reception time difference of the gNB, may be inaccurate, thereby affecting the positioning accuracy.

Moreover, since a value of the transmission and reception timing error changes as time changes, transmission and reception timing errors, which are corresponding to DL-PRSes or SRS-Poses transmitted or received at different time instants, and corresponding to multiple samples included in a measurement report, are different. However, in related art, there is no mechanism to enable a location management function (Location Management Function, LMF) to know transmission and reception timing errors of multiple sample measurement values for the DL-PRSes or the SRS-Poses transmitted or received at different time instants, and there may be an issue that a measurement quantity of the transmission and reception time difference of the UE does not match a measurement quantity of the transmission and reception time difference of the gNB, resulting in a low positioning accuracy of a system.

In addition, when transmitting the SRS-Pos, the UE may perform a transmission timing adjustment, and the adjusted transmission timing will affect the accuracy for calculating the measurement quantity of the transmission and reception time difference of the UE and the measurement quantity of the transmission and reception time difference of the gNB, resulting in calculation deviations for these positioning measurement quantities, thereby affecting the positioning accuracy of the system.

In view of the above, the information processing solution for positioning in the related art may result in a low positioning accuracy of the system.

**SUMMARY**

The present disclosure is to provide an information processing method, an information processing apparatus, a location management function server, and a communications device, so as to improve the low positioning accuracy of the system caused by the information processing solution for positioning in the related art.

In order to achieve this, an embodiment of the present disclosure provides an information processing method, applied to a location management function server. The method includes:

receiving timing related information transmitted by a communications device; and
determining a position of UE based on the timing related information,
where the communications device is the UE or a network device; the network device includes a base station or a transmission and reception point (TRP); and
the timing related information includes at least one of

first time information associated with a transmitting time instant or a receiving time instant of an uplink positioning reference signal;

second time information associated with a transmitting time instant or a receiving time instant of a downlink positioning reference signal;

third information associated with a timing error group (TEG);

timing adjustment information;

fourth information associated with the timing adjustment information.

Optionally, the first time information includes uplink timestamp information, and the uplink timestamp information includes: information on a subframe or a slot where the uplink positioning reference signal transmitted by the UE is located; and/or,

the second time information includes: downlink timestamp information, and the downlink timestamp information includes: information on a subframe or a slot where the downlink positioning reference signal transmitted by the network device is located.

Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,

the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.

Optionally, the third information includes at least one of

first association information between timestamp information and a TEG of the UE;

second association information between timestamp information and a TEG of the network device.

The first association information includes: a timestamp corresponding to a time instant when the TEG of the UE changes

The second association information includes: a timestamp corresponding to a time instant when the TEG of the network device changes.

The TEG includes at least one of a transmitting TEG or a receiving TEG.

The timestamp information includes: uplink timestamp information or downlink timestamp information.

Optionally, the third information further includes: a TEG identity number before and after a first timestamp; or, a TEG index number before and after a first timestamp.

The first timestamp is a timestamp corresponding to a time instant when the TEG changes.

Optionally, that the TEG changes includes a TEG identity number or a TEG index number is updated.

Optionally, the timing adjustment information includes: a timing adjustment value configured by the network device, or a timing adjustment value set by the UE.

The timing adjustment information includes time adjustment information for adjusting the transmitting time instant of the uplink positioning reference signal.

Optionally, the timing adjustment information includes: a timing adjustment value corresponding to each of samples used to calculate a positioning measurement quantity.

Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.

That the timing adjustment information changes includes a timing adjustment value of the uplink positioning reference signal transmitted by the UE is updated.

Optionally, the method further includes:

receiving a measurement value of transmission and reception time difference transmitted by the communications device.

The determining the position of the UE based on the timing related information includes:

determining the position of the UE based on the timing related information and the measurement value of transmission and reception time difference.

Optionally, the communications device is the user equipment (UE) or the base station (gNB).

The UE is expected that no timing adjustment has been performed on transmitting times of uplink positioning reference signals corresponding to all sample values used for calculating a measurement value of transmission and reception time difference of the UE; or,

the UE is expected that a same timing adjustment has been performed on transmitting times of uplink positioning reference signals corresponding to all sample values used for calculating a measurement value of transmission and reception time difference of the UE; or,
the gNB is expected that no timing adjustment has been performed on transmitting times of uplink positioning reference signals corresponding to all sample values used for calculating a measurement value of transmission and reception time difference of the gNB; or,
the gNB is expected that a same timing adjustment has been performed on transmitting times of uplink positioning reference signals corresponding to all sample values used for calculating a measurement value of transmission and reception time difference of the gNB.

Optionally, the method further includes:

receiving first indication information transmitted by the communications device, where the first indication information is used to indicate whether a timing adjustment has been performed on a sample that is used by the communications device for calculating a measurement value of transmission and reception time difference; and/or,
transmitting second indication information to the communications device, where the second indication information is used to indicate whether a timing adjustment is to be performed on a sample that is used by the communications device for calculating a measurement value of transmission and reception time difference.

An embodiment of the present disclosure further provides an information processing method, applied to a communications device. The method includes:

transmitting timing related information to a location management function server, where the timing related information is used by the location management function server to determine a position of UE;
where the communications device is: the UE or a network device; the network device includes a base station or a transmission and reception point (TRP); the timing related information includes at least one of:

first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

Optionally, the first time information includes uplink timestamp information, and the uplink timestamp information includes: information on a subframe or a slot where the uplink positioning reference signal transmitted by the UE is located; and/or,
the second time information includes: downlink timestamp information, and the downlink timestamp information includes: information on a subframe or a slot where the downlink positioning reference signal transmitted by the network device is located.
Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,
the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.
Optionally, the third information includes at least one of:

first association information between timestamp information and a TEG of the UE;
second association information between timestamp information and a TEG of the network device.

The first association information includes: a timestamp corresponding to a time instant when the TEG of the UE changes.

The second association information includes: a timestamp corresponding to a time instant when the TEG of the network device changes.

The TEG includes at least one of a transmitting TEG or a receiving TEG.

The timestamp information includes: uplink timestamp information or downlink timestamp information.

Optionally, the third information further includes: a TEG identity number before and after a first timestamp; or, a TEG index number before and after a first timestamp;

where the first timestamp is a timestamp corresponding to a time instant when the TEG changes.

Optionally, that the TEG changes includes a TEG identity number or a TEG index number is updated.

Optionally, the timing adjustment information includes: a timing adjustment value configured by the network device, or a timing adjustment value set by the UE.

The timing adjustment information includes time adjustment information for adjusting the transmitting time instant of the uplink positioning reference signal.

Optionally, the timing adjustment information includes: a timing adjustment value corresponding to each od samples used to calculate a positioning measurement quantity.

Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.

That the timing adjustment information changes includes a timing adjustment value of the uplink positioning reference signal transmitted by the UE is changed.

Optionally, the method further includes:

obtaining sample values for a transmission and reception time difference that have same timing adjustment information;
obtaining a measurement value of transmission and reception time difference based on at least some of the obtained sample values; and
transmitting the measurement value of transmission and reception time difference to the location management function server.

Optionally, the method further includes:

in a case that the communications device is the UE, determining that no timing adjustment has been performed on transmitting times of uplink positioning reference signals corresponding to all sample values used for calculating a measurement value of transmission and reception time difference of the UE; or,
in a case that the communications device is the UE, determining that a same timing adjustment has been performed on transmitting times of uplink positioning reference signals corresponding to all sample values used for calculating a measurement value of transmission and reception time difference of the UE; or,
in a case that the communications device is the gNB, determining that no timing adjustment has been performed on transmitting times of uplink positioning reference signals corresponding to all sample values used for calculating a measurement value of transmission and reception time difference of the gNB; or,
in a case that the communications device is the gNB, determining that a same timing adjustment has been performed on transmitting times of uplink positioning reference signals corresponding to all sample values used for calculating a measurement value of transmission and reception time difference of the gNB.

Optionally, the method further includes:

transmitting first indication information to the location management function server, where the first indication information is used to indicate whether a timing adjustment is performed on a sample that is used by the communications device for calculating a measurement value of transmission and reception time difference; and/or,
receiving second indication information transmitted by the location management function server, where the second indication information is used to indicate whether a timing adjustment is to be performed on a sample that is used by the communications device for calculating a measurement value of transmission and reception time difference.

An embodiment of the present disclosure provides a location management function server, including a memory, a transceiver and a processor.

The memory is configured to store a computer program; the transceiver is configured to transmit and/or receive data under the control of the processor; the processor is configured to read the computer program from the memory to perform the following operations:

receiving, through the transceiver, timing related information transmitted by a communications device; and
determining a position of UE based on the timing related information,
where the communications device is the UE or a network device; the network device includes a base station or a transmission and reception point (TRP); and the timing related information includes at least one of
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

Optionally, the first time information includes uplink timestamp information, and the uplink timestamp information includes: information on a subframe or a slot where the uplink positioning reference signal transmitted by the UE is located; and/or,
the second time information includes: downlink timestamp information, and the downlink timestamp information includes: information on a subframe or a slot where the downlink positioning reference signal transmitted by the network device is located.
Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,
the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.
Optionally, the third information includes at least one of:

first association information between timestamp information and a TEG of the UE;
second association information between timestamp information and a TEG of the network device.

The first association information includes: a timestamp corresponding to a time instant when the TEG of the UE changes.
The second association information includes: a timestamp corresponding to a time instant when the TEG of the network device changes.
The TEG includes at least one of a transmitting TEG or a receiving TEG.
The timestamp information includes: uplink timestamp information or downlink timestamp information.
Optionally, the third information further includes: a TEG identity number before and after a first timestamp; or, a TEG index number before and after a first timestamp;
where the first timestamp is a timestamp corresponding to a time instant when the TEG changes.
Optionally, that the TEG changes includes a TEG identity number or a TEG index number is updated.
Optionally, the timing adjustment information includes: a timing adjustment value configured by the network device, or a timing adjustment value set by the UE;
The timing adjustment information includes time adjustment information for adjusting the transmitting time instant of the uplink positioning reference signal.
Optionally, the timing adjustment information includes: a timing adjustment value corresponding to each of samples used to calculate a positioning measurement quantity.
Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.
That the timing adjustment information changes includes a timing adjustment value of the uplink positioning reference signal transmitted by the UE is updated.
Optionally, the operations further include:

receiving, through the transceiver, a measurement value of transmission and reception time difference transmitted by the communications device;
the determining the position of the UE based on the timing related information includes:
determining the position of the UE based on the timing related information and the measurement value of transmission and reception time difference.

Optionally, the communications device is the user equipment (UE) or the base station (gNB).

The UE is expected that no timing adjustment has been performed on transmitting times of uplink positioning reference signals corresponding to all sample values used for calculating a measurement value of transmission and reception time difference of the UE; or,

the UE is expected that a same timing adjustment has been performed on transmitting times of uplink positioning reference signals corresponding to all sample values used for calculating a measurement value of transmission and reception time difference of the UE; or,
the gNB is expected that no timing adjustment has been performed on transmitting times of uplink positioning reference signals corresponding to all sample values used for calculating a measurement value of transmission and reception time difference of the gNB; or,
the gNB is expected that a same timing adjustment has been performed on transmitting times of uplink positioning reference signals corresponding to all sample values used for calculating a measurement value of transmission and reception time difference of the gNB.

Optionally, the operations further include:

receiving, through the transceiver, first indication information transmitted by the communications device, where the first indication information is used to indicate whether a timing adjustment has been performed on a sample that is used by the communications device for calculating a measurement value of transmission and reception time difference; and/or,
transmitting, through the transceiver, second indication information to the communications device, where the second indication information is used to indicate whether a timing adjustment is to be performed on a sample that is used by the communications device for calculating a measurement value of transmission and reception time difference.

An embodiment of the present disclosure further provides a communications device, including a memory, a transceiver and a processor.

The memory is configured to store a computer program; the transceiver is configured to transmit and/or receive data under the control of the processor; the processor is configured to read the computer program from the memory to perform the following operations:

transmitting, through the transceiver, timing related information to a location management function server, where the timing related information is used by the location management function server to determine a position of UE;
the communications device is: the UE or a network device; the network device includes a base station or a transmission and reception point (TRP); the timing related information includes at least one of:
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

Optionally, the first time information includes uplink timestamp information, and the uplink timestamp information includes: information on a subframe or a slot where the uplink positioning reference signal transmitted by the UE is located; and/or,
the second time information includes: downlink timestamp information, and the downlink timestamp information includes: information on a subframe or a slot where the downlink positioning reference signal transmitted by the network device is located.

Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,

the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.

Optionally, the third information includes at least one of:

first association information between timestamp information and a TEG of the UE;
second association information between timestamp information and a TEG of the network device.

The first association information includes: a timestamp corresponding to a time instant when the TEG of the UE changes.

The second association information includes: a timestamp corresponding to a time instant when the TEG of the network device changes.

The TEG includes at least one of a transmitting TEG or a receiving TEG.

The timestamp information includes: uplink timestamp information or downlink timestamp information.

Optionally, the third information further includes: a TEG identity number before and after a first timestamp; or, a TEG index number before and after a first timestamp;

where the first timestamp is a timestamp corresponding to a time instant when the TEG changes.

Optionally, that the TEG changes includes a TEG identity number or a TEG index number is updated.

Optionally, the timing adjustment information includes: a timing adjustment value configured by the network device, or a timing adjustment value set by the UE.

The timing adjustment information refers to time adjustment information for adjusting the transmitting time instant of the uplink positioning reference signal.

Optionally, the timing adjustment information includes: a timing adjustment value corresponding to each of samples used to calculate a positioning measurement quantity.

Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.

The timing adjustment information changes refers to that a timing adjustment value of the uplink positioning reference signal transmitted by the UE is updated.

Optionally, the operations further include:

obtaining sample values for transmission and reception time difference that have same timing adjustment information;
obtaining a measurement value of transmission and reception time difference based on at least some of the obtained sample values;
transmitting, through the transceiver, the measurement value of transmission and reception time difference to the location management function server.

Optionally, the operations further include:

in a case that the communications device is the UE, determining that no timing adjustment has been performed on transmitting times of uplink positioning reference signals corresponding to all sample values used for calculating a measurement value of transmission and reception time difference of the UE; or,
in a case that the communications device is the UE, determining that a same timing adjustment has been performed on transmitting times of uplink positioning reference signals corresponding to all sample values used for calculating a measurement value of transmission and reception time difference of the UE; or,
in a case that the communications device is the gNB, determining that no timing adjustment has been performed on transmitting times of uplink positioning reference signals corresponding to all sample values used for calculating a measurement value of transmission and reception time difference of the gNB; or,
in a case that the communications device is the gNB, determining that a same timing adjustment has been performed on transmitting times of uplink positioning reference signals corresponding to all sample values used for calculating a measurement value of transmission and reception time difference of the gNB.

Optionally, the operations further include:

transmitting, through the transceiver, first indication information to the location management function server, where the first indication information is used to indicate whether a timing adjustment has been performed on a sample that is used by the communications device for calculating a measurement value of transmission and reception time difference; and/or,

receiving, through the transceiver, second indication information transmitted by the location management function server, where the second indication information is used to indicate whether a timing adjustment is to be performed on a sample that is used by the communications device for calculating a measurement value of transmission and reception time difference.

An embodiment of the present disclosure further provides an information processing apparatus, applied to a location management function server, including:

a first receiving unit, configured to receive timing related information transmitted by a communications device; and
a first determination unit, configured to determine a position of UE based on the timing related information,
where the communications device is the UE or a network device; the network device includes a base station or a transmission and reception point (TRP); and
the timing related information includes at least one of:
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

Optionally, the first time information includes uplink timestamp information, and the uplink timestamp information includes: information on a subframe or a slot where the uplink positioning reference signal transmitted by the UE is located; and/or,
the second time information includes: downlink timestamp information, and the downlink timestamp information includes: information on a subframe or a slot where the downlink positioning reference signal transmitted by the network device is located.
Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,
the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.
Optionally, the third information includes at least one of:

first association information between timestamp information and a TEG of the UE;
second association information between timestamp information and a TEG of the network device.

The first association information includes: a timestamp corresponding to a time instant when the TEG of the UE changes.
The second association information includes: a timestamp corresponding to a time instant when the TEG of the network device changes.
The TEG includes at least one of a transmitting TEG or a receiving TEG.
The timestamp information includes: uplink timestamp information or downlink timestamp information.
Optionally, the third information further includes: a TEG identity number before and after a first timestamp; or, a TEG index number before and after a first timestamp;
where the first timestamp is a timestamp corresponding to a time instant when the TEG changes.
Optionally, the TEG changes refers to that a TEG identity number or a TEG index number is updated.
Optionally, the timing adjustment information includes: a timing adjustment value configured by the network device, or a timing adjustment value set by the UE.
The timing adjustment information refers to time adjustment information for adjusting the transmitting time instant of the uplink positioning reference signal.

Optionally, the timing adjustment information includes: a timing adjustment value corresponding to each of samples used to calculate a positioning measurement quantity.

Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.

The timing adjustment information changes refers to that a timing adjustment value of the uplink positioning reference signal transmitted by the UE is updated.

Optionally, the apparatus further includes: a second receiving unit, configured to receive a measurement value of transmission and reception time difference transmitted by the communications device;

where the determining the position of the UE based on the timing related information includes:

determining the position of the UE based on the timing related information and the measurement value of transmission and reception time difference.

Optionally, the communications device is the user equipment (UE) or the base station (gNB).

The UE is expected that no timing adjustment has been performed on transmitting times of uplink positioning reference signals corresponding to all sample values used for calculating a measurement value of transmission and reception time difference of the UE; or,

the UE is expected that a same timing adjustment has been performed on transmitting times of uplink positioning reference signals corresponding to all sample values used for calculating a measurement value of transmission and reception time difference of the UE; or,

the gNB is expected that no timing adjustment has been performed on transmitting times of uplink positioning reference signals corresponding to all sample values used for calculating a measurement value of transmission and reception time difference of the gNB; or,

the gNB is expected that a same timing adjustment has been performed on transmitting times of uplink positioning reference signals corresponding to all sample values used for calculating a measurement value of transmission and reception time difference of the gNB.

Optionally, the apparatus further includes:

a third receiving unit, configured to receive first indication information transmitted by the communications device, where the first indication information is used to indicate whether a timing adjustment has been performed on a sample that is used by the communications device for calculating a measurement value of transmission and reception time difference; and/or,

a first transmitting unit, configured to transmit second indication information to the communications device, where the second indication information is used to indicate whether a timing adjustment is to be performed on a sample that is used by the communications device for calculating a measurement value of transmission and reception time difference.

An embodiment of the present disclosure further provides an information processing apparatus, applied to a communications device. The apparatus includes:

a second transmitting unit, configured to transmit timing related information to a location management function server, where the timing related information is used by the location management function server to determine a position of UE;

where the communications device is: the UE or a network device; the network device includes a base station or a transmission and reception point (TRP); the timing related information includes at least one of:

first time information associated with a transmitting time instant or a receiving time instant of an uplink positioning reference signal;

second time information associated with a transmitting time instant or a receiving time instant of a downlink positioning reference signal;

third information associated with a timing error group (TEG);

timing adjustment information;

fourth information associated with the timing adjustment information.

Optionally, the first time information includes uplink timestamp information, and the uplink timestamp information includes: information on a subframe or a slot where the uplink positioning reference signal transmitted by the UE is located; and/or,

the second time information includes: downlink timestamp information, and the downlink timestamp information includes: information on a subframe or a slot where the downlink positioning reference signal transmitted by the network device is located.

Optionally, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set; and/or,

the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set.

Optionally, the third information includes at least one of:

first association information between timestamp information and a TEG of the UE;
second association information between timestamp information and a TEG of the network device.

The first association information includes: a timestamp corresponding to a time instant when the TEG of the UE changes.

The second association information includes: a timestamp corresponding to a time instant when the TEG of the network device changes.

The TEG includes at least one of a transmitting TEG or a receiving TEG.

The timestamp information includes: uplink timestamp information or downlink timestamp information.

Optionally, the third information further includes: a TEG identity number before and after a first timestamp; or, a TEG index number before and after a first timestamp;

where the first timestamp is a timestamp corresponding to a time instant when the TEG changes.

Optionally, that the TEG changes includes a TEG identity number or a TEG index number is updated.

Optionally, the timing adjustment information includes: a timing adjustment value configured by the network device, or a timing adjustment value set by the UE.

The timing adjustment information refers to time adjustment information for adjusting the transmitting time instant of the uplink positioning reference signal.

Optionally, the timing adjustment information includes: a timing adjustment value corresponding to each of samples used to calculate a positioning measurement quantity.

Optionally, the fourth information includes: uplink timestamp information corresponding to a time instant when the timing adjustment information changes, and a changed amount for timing adjustment at the time instant when the timing adjustment information changes or a timing adjustment value before and after the time instant when the timing adjustment information changes.

That the timing adjustment information changes includes a timing adjustment value of the uplink positioning reference signal transmitted by the UE is updated.

Optionally, the apparatus further includes:

a first obtaining unit, configured to obtain sample values for transmission and reception time difference that have same timing adjustment information;
a first processing unit, configured to obtain the transmission and reception time difference based on at least some of the obtained sample values;
a third transmitting unit, configured to transmit the measurement value of transmission and reception time difference to the location management function server.

Optionally, the apparatus further includes a second determining unit, configured to:

in a case that the communications device is the UE, determine that no timing adjustment has been performed on transmitting times of uplink positioning reference signals corresponding to all sample values used for calculating a measurement value of transmission and reception time difference of the UE; or,
in a case that the communications device is the UE, determine that a same timing adjustment has been performed on transmitting times of uplink positioning reference signals corresponding to all sample values used for calculating a measurement value of transmission and reception time difference of the UE; or,

in a case that the communications device is the gNB, determine that no timing adjustment has been performed on transmitting times of uplink positioning reference signals corresponding to all sample values used for calculating a measurement value of transmission and reception time difference of the gNB; or,

in a case that the communications device is the gNB, determine that a same timing adjustment has been performed on transmitting times of uplink positioning reference signals corresponding to all sample values used for calculating a measurement value of transmission and reception time difference of the gNB.

Optionally, the apparatus further includes:

a fourth transmitting unit, configured to transmit first indication information to the location management function server, where the first indication information is used to indicate whether a timing adjustment has been performed on a sample that is used by the communications device for calculating a measurement value of transmission and reception time difference; and/or,

a fourth receiving unit, configured to receive second indication information transmitted by the location management function server, where the second indication information is used to indicate whether a timing adjustment is to be performed on a sample that is used by the communications device for calculating a measurement value of transmission and reception time difference.

An embodiment of the present disclosure further provides a processor readable storage medium. The processor readable storage medium stores a computer program. The computer program is configured to enable a processor to execute the above information processing method applied to the location management function server, or the computer program is configured to enable a processor to execute the above information processing method applied to the communications device.

The beneficial effects of the aforementioned technical solutions of the present disclosure are as follows.

In the above solutions, with the information processing method, timing related information transmitted by a communications device is received and a position of UE is determined based on the timing related information. The communications device is the UE or a network device; the network device includes a base station or a transmission and reception point (TRP). The timing related information includes at least one of first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. In this way, it is enabled to accurately determine the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB). Thus, such information can be used to compensate for or adjust the (positioning) measurement quantity of the transmission and reception time difference when calculating the position, which can address a decreasing in the accuracy of the calculated position of UE due to a mismatch of the measurement quantity of the transmission and reception time difference of the UE and the measurement quantity of the transmission and reception time difference of the gNB, or due to the uplink timing adjustment of the UE, thereby improving the positioning accuracy of the system.

**BRIEF DESCRIPTION OF THE DRAWINGS**

FIG. 1 is a schematic diagram of a radio communications system architecture according to an embodiment of the present disclosure;

FIG. 2 is a schematic diagram of a Multi-RTT positioning solution according to an embodiment of the present disclosure;

FIG. 3 is a first schematic flowchart of an information processing method according to an embodiment of the present disclosure;

FIG. 4 is a second schematic flowchart of an information processing method according to an embodiment of the present disclosure;

FIG. 5 is a schematic diagram of uplink timestamp information provided by UE to an LMF according to an embodiment of the present disclosure;

FIG. 6 is a schematic diagram of association information between uplink timestamps provided by UE to an LMF and UE Tx TEGs according to an embodiment of the present disclosure;

FIG. 7 is a schematic diagram of timing adjustment information provided by UE to an LMF according to an embodiment of the present disclosure;

FIG. 8 is a schematic diagram of change information on timing adjustment provided by UE to an LMF according to an embodiment of the present disclosure;

FIG. 9 is a schematic diagram of ensuing all samples to be subjected to the same timing adjustment processing when UE calculates a transmission and reception time difference according to an embodiment of the present disclosure;

FIG. 10 is a schematic structural diagram of a location management function server according to an embodiment of the present disclosure;

FIG. 11 is a first schematic structural diagram of a communications device according to an embodiment of the present disclosure;

FIG. 12 is a second schematic structural diagram of a communications device according to an embodiment of the present disclosure;

FIG. 13 is a first schematic structural diagram of an information processing apparatus according to an embodiment of the present disclosure; and

FIG. 14 is a second schematic structural diagram of an information processing apparatus according to an embodiment of the present disclosure.

## DETAILED DESCRIPTION

In the following, technical solutions in embodiments of the present disclosure will be described in a clear manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

It is noted that the technical solution according to embodiments of the present disclosure may be applied to various systems, particularly to a 5th generation mobile communication technology (5th Generation Mobile Communication Technology, 5G) system. For example, an applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide interoperability for Microwave Access, WiMAX) system, and a 5G new radio (New Radio, NR) system. Each of the various systems includes a terminal and a network device. The systems may further include a core network portion, such as an evolved packet system (Evolved Packet System, EPS), or a 5G system (5G System).

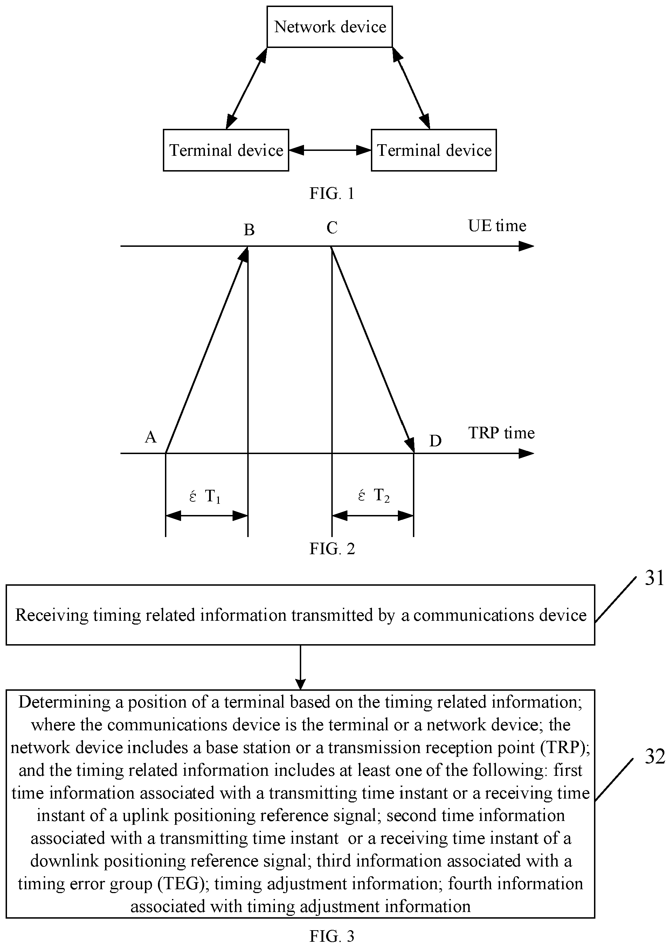

The communications device according to embodiments of the present disclosure may be implemented as UE (also referred to as a terminal device) or as a network device. FIG. 1 shows a block diagram of a radio communications system to which embodiments of the present disclosure are applicable. The radio communications system includes terminal devices and a network device.

The terminal device involved in the embodiments of the present disclosure may be a device that provides voice and/or data connectivity to a user, a handheld device with a radio connection function, or other processing devices connected to a radio modem or the like. In different systems, the name of the terminal device may be different. For example, in a 5G system, the terminal device may be referred to as user equipment (User Equipment, UE). A radio terminal device can communicate with one or more core networks (Core Networks, CNs) via a radio access network (Radio Access Network, RAN), and the radio terminal device may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The radio terminal device may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), the embodiments of the present disclosure are not limited thereto.

The network device involved in the embodiments of the present disclosure may be a base station. The base station may include multiple cells that provide services to a terminal. Depending on the specific application scenario, the base station may be referred to as an access point, or may be a device in the access network that communicates over an air interface with the radio terminal device through one or more sectors, or may be called another name. The network device may be configured for converting the received radio frames into Internet protocol (Internet Protocol, IP) packets or vice versa, and serves as a router between the radio terminal device and the rest of the access network. The rest of the access network may include an Internet protocol IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB (NodeB) in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, the embodiments of the disclosure are not limited thereto. In some network architectures, the network device may include a centralized unit (Centralized Unit, CU) node and a distributed unit (Distributed Unit, DU) node, which may be geographically separated.

The network device and the terminal device may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

The contents involved in the solution provided by the embodiments of the present disclosure will be first introduced hereinafter.

Measurement quantities used in the multi round-trip time (Multi Round-Trip Time, Multi-RTT) positioning method include a time difference (referred to as transmission and reception time difference of the UE), which is between an arrival time of a DL-PRS from each TRP measured by UE and a time when a sounding reference signal for positioning (SRS-Pos) is transmitted by the UE, and a time difference (referred to as transmission and reception time difference of the gNB), which is between an arrival time of SRS-Pos from UE measured by each transmission and reception point (Transmission Reception Point, TRP) and a time when a downlink positioning reference signal (DL-PRS) is transmitted by the TRP. As shown in FIG. 2, (A represents $t_{TRP}^{Tx}$, B represents $t_{UE}^{Rx}$, C represents $t_{UE}^{Tx}$, D represents $t_{TRP}^{Rx}$), a round-trip time (RTT) of a signal between UE and a certain TRP may be obtained through a sum of transmission and reception time difference of the UE ($t_{UE}^{Rx} - t_{UE}^{Tx}$) measured by the UE according to DL-PRS of the TRP, and transmission and reception time difference of the gNB ($t_{TRP}^{Rx} - t_{TRP}^{Tx}$) measured by the TRP according to SRS-Pos of the UE. A distance between the UE and the TRP may be obtained by multiplying 1/2 RTT by the speed of light. It should be noted that when this method is used to obtain the RTT, it does not require the precise time synchronization between the UE and the TRP. Regarding the RTT, specifically, it may be derived according to FIG. 2: RTT = ($\Delta$ T1 +$\Delta$ T2) $= \left(t_{UE}^{Rx} - t_{TRP}^{Tx}\right) + \left(t_{TRP}^{Rx} - t_{UE}^{Tx}\right) = \left(t_{UE}^{Rx} - t_{UE}^{Tx}\right) + \left(t_{TRP}^{Rx} - t_{TRP}^{Tx}\right)$, where $t_{UE}^{Rx}$ represents a time when the DL-PRS is received, $t_{TRP}^{Tx}$ represents a time when the DL-PRS is transmitted, $t_{TRP}^{Rx}$ represents a time when the SRS-Pos is received, and $t_{UE}^{Tx}$ represents a time when the SRS-Pos is transmitted.

From the perspective of signal transmission and reception between UE and each TRP, supporting the Multi-RTT positioning method is basically equivalent to supporting both the downlink time difference of arrival (DL-TDOA) positioning method and the uplink time difference of arrival (UL-TDOA) positioning method.

On the side of the UE, the UE transmits SRS-Pos according to SRS-Pos configuration provided by a serving base station. The UE learns configuration information of DL-PRS transmitted by each of surrounding TRPs based on auxiliary data provided by an LMF. According to the configuration information of the DL-PRS of each of TRPs, the UE receives the DL-PRS transmitted by each od TRPs, obtains an arrival time of the DL-PRS, and then obtains the transmission and reception time difference of the UE (corresponding to a difference between two time points on the axis of UE time in FIG. 2) according to a difference between an arrival time of the DL-PRS obtained by measurement and a time when the UE itself transmits the SRS-Pos.

At the side of each TRP, each TRP learns configuration information of SRS-Pos from UE based on auxiliary data provided by the LMF, receives the SRS-Pos transmitted by the UE based on the configuration information of the SRS-Pos, and obtains an arrival time of the SRS-Pos. Then each TRP obtains the transmission and reception time difference of the gNB (corresponding to a difference between two time points on the axis of gNB time in FIG. 2) based on a difference between an arrival time of the SRS-Pos obtained by measurement and a time when the gNB itself transmits the DL-PRS.

A network-based positioning manner is generally adopted in the Multi-RTT positioning method. The UE reports the obtained transmission and reception time difference of the UE to the LMF, each TRP also provides the obtained transmission and reception time difference of the gNB to the LMF, and the LMF obtains a distance between the UE and each TRP by using the transmission and reception time difference of the UE and the transmission and reception time difference of the gNB. Finally, a position of the UE is calculated according to the above information and other known information (such as geographic coordinates of the TRP).

On the basis of the above, embodiments of the present disclosure provide an information processing method and an information processing apparatus, a location management function server and a communications device, so as to improve a low positioning accuracy of a system caused by the information processing solution for positioning in the related art. The method, apparatus, location management function server and communications device are based on the same concept, and since the method, the apparatus, the location management function server and the communications device have similar principles for addressing technical issues, for implementations of the method, the apparatus, the location management function server and the communications device, reference may be made to each other and repeated part will not be described.

An information processing method is provided by an embodiment of the present disclosure, which is applied to a location management function server. As shown in FIG. 3, the method includes following steps.

Step 31: receiving timing related information transmitted by a communications device.

Step 32: determining a position of UE based on the timing related information. The communications device is the UE or a network device; the network device includes a base station or a transmission and reception point (TRP); and the timing related information includes at least one of: first time information associated with a transmitting time instant or a receiving time instant of an uplink positioning reference signal; second time information associated with a transmitting time instant or a receiving time instant of a downlink positioning reference signal; third information associated with a timing error group (timing error group, TEG); timing adjustment information; fourth information associated with the timing adjustment information.

The location management function server may specifically be implemented as a location management function (Location Management Function, LMF); the timing adjustment information may also be referred to as timing advance information; and the fourth information may also be interpreted as change information.

In the information processing method according to the embodiments of the present disclosure, timing related information transmitted by a communications device is received, and a position of UE is determined based on the timing related information. The communications device is the UE or a network device; the network device includes a base station or a transmission and reception point (TRP). The timing related information includes at least one of first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. It is enabled to accurately determine the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB). Thus, such information can be used to compensate for or adjust the (positioning) measurement quantity of the transmission and reception time difference when calculating the position of the UE, which can address a decrease in the calculating accuracy of the UE position due to the mismatch between the measurement quantity of the transmission and reception time difference of the UE and the measurement quantity of the transmission and reception time difference of the gNB, or due to the uplink timing adjustment of the UE, thereby improving the positioning accuracy of the system.

The first time information may include uplink timestamp information, and the uplink timestamp information includes: information on a subframe or a slot where the uplink positioning reference signal transmitted by the UE is located; and/or, the second time information may include: downlink timestamp information, and the downlink timestamp information includes: information on a subframe or a slot where the downlink positioning reference signal transmitted by the network device is located.

In this way, the transmission and reception timing error can be accurately adjusted subsequently according to the first time information or the second time information. Specifically, the uplink positioning reference signal may be an SRS-Pos, and the downlink positioning reference signal may be a DL-PRS.

In an embodiment of the present disclosure, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set. Specifically, one sample values refers to a measurement value corresponding to one uplink positioning reference signal resource or one uplink positioning reference signal resource set. Optionally or additionally, the downlink timestamp information includes: downlink timestamp information corresponding to sample value of the downlink positioning reference signals, where the downlink positioning reference signal is used to calculate a positioning measurement value and generate a measurement report or a measurement instance; one sample value corresponds to one downlink positioning reference signal resource or one downlink positioning reference signal resource set. Specifically, one sample value refers to a measurement value corresponding to a downlink positioning reference signal resource or a downlink positioning reference signal resource set.

In this way, accurate adjustment at sample granularity for the transmission and reception timing error can be realized.

The third information may include at least one of: first association information between timestamp information and a TEG of the UE; second association information between timestamp information and a TEG of the network device, where the first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In this way, accurate adjustment can be performed subsequently for the transmission and reception timing error according to the timestamp information.

In an embodiment of the present disclosure, the third information further includes: a TEG identity number before a first timestamp and a TEG identity number after the first timestamp; or, a TEG index number before a first timestamp and a TEG index number after the first timestamp; the first timestamp is a timestamp corresponding to a time instant when the TEG changes.

In this way, the TEG identity numbers or the TEG index numbers before and after the change can be directly and accurately obtained. The expression "the TEG changes" means that the TEG identity number or the TEG index number is updated. It may also be understood that the expression "the TEG changes" means that the TEG identity number or the TEG index number is changed. Specifically, for example, a TEG identity number before the time instant when the change occurs is TEG1, and a TEG identity number after the time instant when the change occurs is TEG2. In an embodiment of the present disclosure, the timing adjustment information includes: a timing adjustment value configured by the network device, or a timing adjustment value set by the UE. The timing adjustment information refers to time adjustment information used to adjust the transmitting time instant of the uplink positioning reference signal.

In this way, the uplink timing adjustment can be accurately processed subsequently according to the timing adjustment value. The uplink positioning reference signal may specifically be SRS-Pos.

The timing adjustment information may include: a timing adjustment value corresponding to each of samples used to calculate a positioning measurement quantity. One sample value refers to a measurement value corresponding to one uplink reference signal resource or one uplink reference signal resource set.

In this way, subsequent timing adjustment at sample granularity can be supported.

In an embodiment of the present disclosure, the fourth information includes: uplink timestamp information corresponding to a time instant when the timing adjustment information changes, and a changed amount for timing adjustment at the time instant when the change occurs or timing adjustment values before and after the time instant when the change occurs. The expression "the timing adjustment information changes" mean that the timing adjustment value of the uplink positioning reference signal transmitted by the UE is changed. The uplink positioning reference signal may specifically be SRS-Pos.

In this way, even if a timing adjustment (Timing Adjustment, TA) changes, a processing can still be accurately performed according to the TA. In an embodiment of the present disclosure, the TA after the change may be determined according to the TA before the change and the changed amount for the timing adjustment, such that the subsequent processing can be performed according to the TA after the change.

Furthermore, the information processing method further includes: receiving a measurement value of transmission and reception time difference transmitted by the communications device; where the determining the position of the UE based on the timing related information includes: determining the position of the UE based on the timing related information and the measurement value of transmission and reception time difference. The communications device is user equipment (UE), and the measurement value of transmission and reception time difference is a measurement value of transmission and reception time difference of the UE; or, the communications device is a base station (gNB), and the measurement value of transmission and reception time difference is a measurement value of transmission and reception time difference of the gNB; or, the communications device is a transmission and reception point (TRP), and the transmission and reception time difference measurement value is a measurement value of transmission and reception time difference of the TRP.

In this way, the accuracy of UE positioning can be improved.

The communications device may be user equipment (UE) or a base station (gNB); the UE is expected that no timing adjustment has been performed on transmitting times of uplink positioning reference signals corresponding to all sample values, which are used for calculating a measurement value of transmission and reception time difference of the UE; or, the UE is expected that a same timing adjustment has been performed on transmitting times of uplink positioning reference signals corresponding to all sample values, which are used for calculating a measurement value of transmission and reception time difference of the UE; or, the gNB is expected that no timing adjustment has been performed on transmitting times of uplink positioning reference signals corresponding to all sample values, which are used for calculating a measurement value of transmission and reception time difference of the gNB; or, the gNB is expected that a same timing adjustment has been performed on transmitting times of uplink positioning reference signals corresponding to all sample values, which are used for calculating a measurement value of transmission and reception time difference of the gNB. It can be understood that, the communications device is expected that transmitting times of uplink positioning reference signals corresponding to all sample values, which are used for calculating the transmission and reception time difference, have not been subjected to the timing adjustment, or the communications device is expected that transmitting times of uplink positioning reference signals corresponding to all sample values, which are used for calculating the transmission and reception time difference, have been subjected to the same timing adjustment. In addition, optionally, one of the sample values refers to a measurement value corresponding to one uplink reference signal resource or one uplink reference signal resource set; and/or, one of the sample values refers to a measurement value corresponding to one downlink reference signal resource or one downlink reference signal resource set. All the sample values belong to a same measurement report or a same measurement instance. It is noted that the location management function server expects these actions are to be performed by the UE or the gNB, and the expression "expects" or "is expected" means that such a processing manner is an optimized processing manner.

In this way, the location management function server is capable of performing an accurate compensation for the timing adjustment, in a case that there is SRS-Pos transmitting timing adjustment, and multiple SRS-Pos sample values are used to generate one measurement report.

Furthermore, the information processing method further includes: receiving first indication information transmitted by the communications device; where the first indication information is used to indicate whether a timing adjustment has been performed on a sample that is used by the communications device for calculating a measurement value of transmission and reception time difference; and/or, transmitting second indication information to the communications device, where the second indication information is used to indicate whether a timing adjustment is to be performed on a sample that is used by the communications device for calculating a measurement value of transmission and reception time difference.

In this way, whether to perform the timing adjustment can be flexibly determined, and notify the same to the peer end.

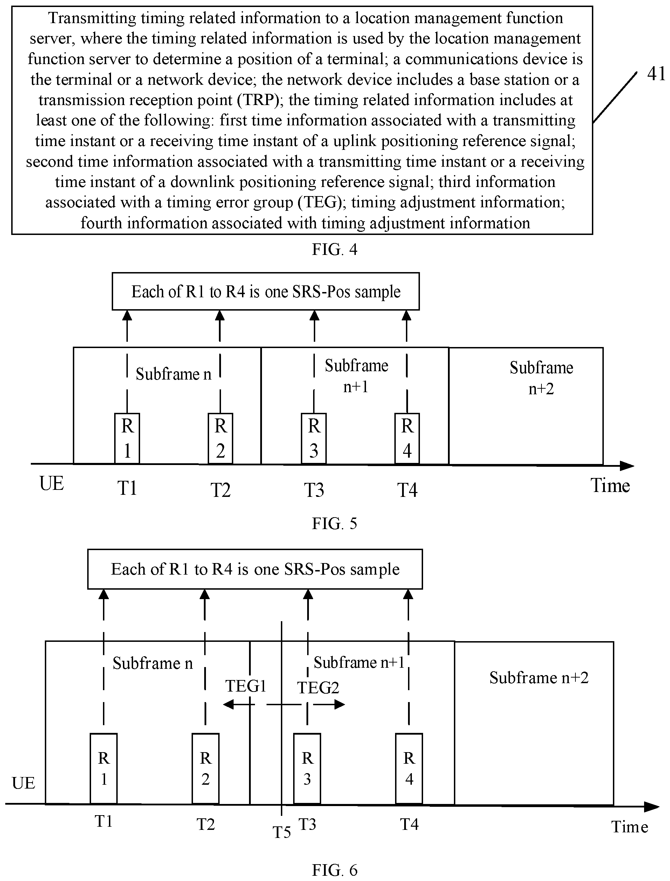

An embodiment of the present disclosure further provides an information processing method, applied to a communications device. As shown in FIG. 4, the method includes following step.

Step 41: transmitting timing related information to a location management function server, where the timing related information is used by the location management function server to determine a position of UE; where the communications device is: the UE or a network device; the network device includes a base station or a transmission and reception point (TRP); the timing related information includes at least one of: first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information.

The location management function server may specifically be implemented as LMF; the timing adjustment information may also be referred to as timing advance information; and the fourth information may also be interpreted as change information.

In the information processing method according to the embodiments of the present disclosure, timing related information is transmitted to a location management function server, where the timing related information is used by the location management function server to determine a position of UE. The communications device is the UE or a network device; the network device includes a base station or a transmission and reception point (TRP). The timing related information includes at least one of: first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. It is enabled to accurately determine the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB). Thus, such information can be used to compensate for or adjust the (positioning) measurement quantity of the transmission and reception time difference when calculating the position of the UE, which can address a decrease in the calculating accuracy of the UE position due to the mismatch between the measurement quantity of the transmission and reception time difference of the UE and the measurement quantity of the transmission and reception time difference of the gNB, or due to the uplink timing adjustment of the UE, thereby improving the positioning accuracy of the system.

The first time information includes uplink timestamp information, and the uplink timestamp information includes: information on a subframe or a slot where the uplink positioning reference signal transmitted by the UE is located; and/or, the second time information includes: downlink timestamp information, and the downlink timestamp information includes: information on a subframe or a slot where the downlink positioning reference signal transmitted by the network device is located.

In this way, subsequent accurate adjustment of the transmission and reception timing error according to the first time information or the second time information can be supported. Specifically, the uplink positioning reference signal may be SRS-Pos, and the downlink positioning reference signal may be DL-PRS.

In an embodiment of the present disclosure, the uplink timestamp information includes: uplink timestamp information corresponding to sample values of uplink positioning reference signals, where the uplink positioning reference signals are used to calculate a positioning measurement value and generate a measurement report or a measurement instance; one sample value corresponds to one uplink positioning reference signal resource or one uplink positioning reference signal resource set. Specifically, one of the sample values refers to a measurement value corresponding to one uplink positioning reference signal resource or one uplink positioning reference signal resource set. Optionally or additionally, the downlink timestamp information includes: downlink timestamp information corresponding to sample values of downlink positioning reference signals, where the downlink positioning reference signals are used to calculate a positioning measurement value and generate a measurement report or a measurement instance; one of the sample values corresponds to one downlink positioning reference signal resource or one downlink positioning reference signal resource set. Specifically, one of the sample values refers to a measurement value corresponding to one downlink positioning reference signal resource or one downlink positioning reference signal resource set.

In this way, it is supported that accurate adjustment at the sample granularity for the transmission and reception timing error can be realized.

The third information includes at least one of first association information between timestamp information and a TEG of the UE; second association information between timestamp information and a TEG of the network device, where the first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In this way, subsequent accurate adjustment for the transmission and reception timing error according to the timestamp information can be supported.

In an embodiment of the present disclosure, the third information further includes: TEG identity numbers before and after a first timestamp; or, TEG index numbers before and after a first timestamp; the first timestamp is a timestamp corresponding to a time instant when the TEG changes.

In this way, the TEG identity numbers or the TEG index numbers before and after the change can be directly and accurately obtained. The expression "the TEG changes" means that the TEG identity number or the TEG index number is updated. It may also be understood that, the expression "the TEG changes" means that the TEG identity number or the TEG index number is changed.

In an embodiment of the present disclosure, the timing adjustment information includes: a timing adjustment value configured by the network device, or a timing adjustment value configured by the UE. The timing adjustment information refers to time adjustment information for adjusting the transmitting time instant of the uplink positioning reference signal.

In this way, it can be supported that the uplink timing adjustment is accurately processed subsequently according to the timing adjustment value. The uplink positioning reference signal may specifically be SRS-Pos.

The timing adjustment information may include: a timing adjustment value corresponding to each sample used to calculate a positioning measurement quantity. One sample value refers to a measurement value corresponding to one uplink reference signal resource or one uplink reference signal resource set.

In this way, it can be supported that subsequent timing adjustment at the sample granularity can be realized.

In an embodiment of the present disclosure, the fourth information includes: uplink timestamp information corresponding to a time instant when the timing adjustment information changes, and a changed amount for timing adjustment at the time instant when the change occurs or a timing adjustment value before and after the time instant when the change occurs. The expression "the timing adjustment information changes" means that the timing adjustment value of the uplink positioning reference signal transmitted by the UE is changed. The uplink positioning reference signal may specifically be SRS-Pos.

Exemplarily, the timing adjustment value before the time instant when the change occurs is A1, and the timing adjustment value after the time instant when the change occurs is A2; or, the timing adjustment value before the time instant when the change occurs is A1, and the changed amount for the timing adjustment is a. In this case, the timing adjustment value after the time instant when the change occurs may be obtained by a calculation: A2 = A1 + a.

In this way, it can be supported that in a case where the TA changes, processing can still be accurately performed for the TA. In an embodiment of the present disclosure, the TA after the change may be determined according to the TA before the change and the changed amount for the timing adjustment, such that the subsequent processing can be be performed according to the TA after the change.

Furthermore, the information processing method further includes: obtaining sample values of transmission and reception time differences that have the same timing adjustment information; obtaining a measurement value of transmission and reception time difference according to at least a certain quantity of the obtained sample values (specifically, which may be all the obtained sample values); and transmitting the measurement value of transmission and reception time difference to the location management function server. The communications device is user equipment (UE), and the measurement value of transmission and reception time difference is a measurement value of transmission and reception time difference of the UE; or, the communications device is a base station (gNB), the measurement value of transmission and reception time difference is a measurement value of transmission and reception time difference of the gNB; or, the communications device is a transmission and reception point (TRP), and the measurement value of transmission and reception time difference is a measurement value of transmission and reception time difference of the TRP. Optionally, one of the sample values refers to a measurement value corresponding to one uplink reference signal resource or one uplink reference signal resource set; and/or, one of the sample values refers to a measurement value corresponding to one downlink reference signal resource or one downlink reference signal resource set. The at least a certain quantity of sample values belong to a same measurement report or a same measurement instance.

In this way, the accuracy of positioning UE can be ensured. Specifically, the "same timing adjustment information" may be interpreted as that, transmitting times of uplink positioning reference signals corresponding to the sample values have been subjected to the same timing adjustment; for example, all the transmitting times are not subjected to any timing adjustment; or, all the transmitting times are subjected to the same timing adjustment.

In an embodiment of the present disclosure, the information processing method further includes: in a case that the communications device is the UE, determining that no timing adjustment has been performed on transmitting times of uplink positioning reference signals corresponding to all sample values, which are used for calculating a measurement value of transmission and reception time difference of the UE; or, in a case that the communications device is the UE, determining that a same timing adjustment has been performed on transmitting times of uplink positioning reference signals corresponding to all sample values, which are used for calculating a measurement value of transmission and reception time difference of the UE; or, in a case that the communications device is the gNB, determining that no timing adjustment has been performed on transmitting times of uplink positioning reference signals corresponding to all sample values, which are used for calculating a measurement value of transmission and reception time difference of the gNB; or, in a case that the communications device is the gNB, determining that a same timing adjustment has been performed on transmitting times of uplink positioning reference signals corresponding to all sample values, which are used for calculating a measurement value of transmission and reception time difference of the gNB.

In this way, it can be supported that the location management function server is capable of performing an accurate compensation for the timing adjustment, in a case that there is an SRS-Pos transmitting timing adjustment and multiple SRS-Pos sample values are used to generate one measurement report.

Furthermore, the information processing method further includes: transmitting first indication information to the location management function server, where the first indication information is used to indicate whether a timing adjustment is performed on a sample that is used by the communications device for calculating a measurement value of transmission and reception time difference; and/or, receiving second indication information transmitted by the location management function server, where the second indication information is used to indicate whether a timing adjustment is to be performed on a sample that is used by the communications device for calculating a measurement value of transmission and reception time difference.

In this way, whether to perform the timing adjustment can be flexibly determined and notify the same to the peer end.

The information processing method provided by the embodiments of the present disclosure will be described below with examples. As an example, the location management function server is a positioning server (specifically, LMF), and the network device is UE and/or gNB.

For addressing technical issues, an embodiment of the present disclosure provides an information processing method, which mainly involves: reporting, by the UE and/or the gNB, timing related information to the positioning server, to assist the positioning server (LMF) to perform UE positioning. The timing related information includes: time information associated with a transmitting time instant or a receiving time instant of an uplink positioning reference signal (SRS-Pos) or a downlink positioning reference signal (DL-PRS) (corresponding to the first time information and the second time information as mentioned above), or information associated with the timing error group (TEG) (corresponding to the third information as mentioned above), or TA information, or information associated with the TA information (corresponding to the fourth information as mentioned above, which may be also interpreted as TA change information). The TA information refers to time adjustment information for adjusting the transmitting time instant of the SRS-Pos.

Specifically, the solution involves the following parts.

Part 1, UE or gNB provides uplink timestamp information to LMF:

(1) UE or a gNB provides uplink timestamp information to LMF, where the uplink timestamp information includes information of a subframe or a slot where an SRS or an SRS-Pos (corresponding to the uplink positioning reference signal) transmitted by the UE is located.

(2) UE or gNB provides downlink timestamp information to LMF, where the downlink timestamp information includes information on a subframe or a slot where a DL-PRS transmitted by TRP (included in gNB) is located.

(3) UE or NB provides LMF with: downlink timestamp information or uplink timestamp information corresponding to all sample values of positioning reference signals, which are used for calculating a positioning measurement value and generating a measurement report or a measurement instance. One of the sample values refers to a measurement value corresponding to one positioning reference signal resource or one (positioning reference signal) resource set. This is corresponding to, as mentioned above, that the uplink timestamp information includes: uplink timestamp information corresponding to sample values of uplink positioning reference signals; where the uplink positioning reference signals are used to calculate a positioning measurement value and generate a measurement report or a measurement instance; and one sample value corresponds to one uplink positioning reference signal resource or one uplink positioning reference signal resource set. Specifically, one of the sample values refers to a measurement value corresponding to one uplink positioning reference signal resource or one uplink positioning reference signal resource set. Optionally or additionally, the downlink timestamp information includes: downlink timestamp information corresponding to sample values of downlink positioning reference signals; where the downlink positioning reference signals are used to calculate a positioning measurement value and generate a measurement report or a measurement instance; one of the sample values refers to a measurement value corresponding to a downlink positioning reference signal resource or a downlink positioning reference signal resource set.

Example of this part - Example 1 (UE provides uplink timestamp information to LMF). In this solution: UE and/or gNB reports the timing related information to the positioning server, to assist the positioning server (LMF) in positioning UE. The timing related information includes: time information associated with a transmitting time instant of an uplink positioning reference signal (SRS-Pos) (corresponding to the first time information), or information associated with a timing error group (TEG) (corresponding to the third information), or TA information, or information associated with the TA information (corresponding to the fourth information, which may be also interpreted as TA change information).

The UE or gNB provides the LMF with uplink timestamp information, and the uplink timestamp information includes information on a subframe or a slot where SRS or SRS-Pos transmitted by the UE is located.

The UE or gNB provides the LMF with uplink timestamp information corresponding to each of sample values of SRS or SRS-Pos, which are used for calculating a positioning measurement value and generating a measurement report or a measurement instance. One sample value refers to a measurement value corresponding to one positioning reference signal resource or one positioning reference signal resource set.

Specifically, as shown in FIG. 5, the UE uses four SRS-Pos sample (measurement) values (i.e., R1 to R4, each of which corresponds to one SRS-Pos sample) to calculate a measurement report #1. Each of the sample values in FIG. 5 corresponds to one SRS-Pos resource or one SRS-Pos resource set. In order to facilitate the positioning server to obtain time information on the SRS-Poses used for calculating the measurement report, the UE reports subframes or slots where the four SRS-Poses are located (corresponding to the above-mentioned first time information) to LMF. Namely, the UE reports subframe information of subframe n or subframe n+1 to the LMF (specifically, a subframe or a slot where a certain SRS-Pos is located may be used as a basis for determining a subframe or a slot where an SRS-Pos adjacent to the certain SRS-Pos is located). However, only reporting the information of the subframe where the SRS-Pos is located may cause a relatively large granularity. In order to obtain a more precise time information reporting, the UE may provide the LMF with uplink timestamp information corresponding to all the sample values of the SRS-Poses used for calculating the positioning measurement value and generating the measurement report #1, namely, information of T 1 to T4 in FIG. 5, and as a result, the LMF can obtain a more precise time information. After obtaining the time information, the LMF can obtain transmission and reception timing errors corresponding to these SRS-Poses or these SRS-Pos sample values, based on a mapping relationship between time information and transmission and reception timing errors (which may be stored locally in the LMF), and then the LMF can perform a compensation for the transmission and reception timing error to eliminate it, so as to improve the positioning accuracy.

By using the method in this example, timestamp information and time information associated with transmitting time instants of positioning reference signals may be indicated, to assist the LMF in determining an influence of a transmission and reception timing error on a measurement quantity of transmission and reception time difference of the UE or a measurement quantity of transmission and reception time difference of the gNB, so that the LMF can use the information to perform compensation for or adjustment on the positioning measurement quantity of the transmission and reception time difference of the UE or the transmission and reception time difference of the gNB when calculating the position of UE, which can address a decrease in the accuracy of calculating the position of UE by the LMF due to a mismatch of the measurement quantity of the transmission and reception time difference of the UE and the measurement quantity of the transmission and reception time difference of the gNB, thereby improving the positioning accuracy of the system.

Part 2, UE or gNB provides LMF with association information between uplink or downlink timestamp and a TEG (timing error group) of UE or TRP:

(1) UE or gNB provides LMF with association information between uplink timestamp information and TEG of UE (UE TEG, an example of the first association information mentioned above). Namely, a mapping relationship between the uplink timestamp and the TEG of UE, including: an uplink timestamp corresponding to a time instant when UE transmit (Transmit, Tx) TEG and/or UE receive (Receive, Rx) TEG changes.

(2) The UE or gNB provides LMF with association information between downlink timestamp information and TEG of TRP (TRP TEG, an example of the second association information mentioned above). Namely, a mapping relationship between the downlink timestamp and the TRP TEG, including: a downlink timestamp corresponding to a time instant when TRP Tx TEG and/or TRP Rx TEG changes.

(3) The UE or gNB may also report, to the LMF, a TEG identity document (Identity Document, ID) before and after a timestamp corresponding to a time instant when the TEG changes. This is corresponding to, as mentioned above, that the third information further includes: TEG identity numbers before and after a first timestamp; or, TEG index numbers before and after a first timestamp; where the first timestamp is a timestamp corresponding to a time instant when the TEG changes. The TEG ID includes a TEG identity number or a TEG index number. The expression "the TEG changes" refers to the TEG identity number or the TEG index number changes.

Example of this part - Example 2 (UE or gNB provides LMF with association information between uplink timestamp or downlink timestamp and UE TEG or TRP TEG). In the solution:

The UE and/or gNB report the timing related information to the positioning server, to assist the positioning server (LMF) in positioning the UE. The timing related information includes: time information associated with a transmitting time instant of a uplink positioning reference signal (SRS-Pos) ((corresponding to the first time information and the second time information mentioned above), or information associated with a timing error group (TEG) (corresponding to the third information mentioned above), or TA information, or information associated with the TA information (corresponding to the fourth information mentioned above, which may be also interpreted as TA change information).

The UE or gNB provides the LMF with association information between uplink timestamp information and UE TEG, namely, a mapping relationship between the uplink timestamp and the UE TEG, including: an uplink timestamp corresponding to a time instant when UE Tx TEG and/or UE Rx TEG changes.

The UE or gNB provides the LMF with association information between downlink timestamp information and TRP TEG, namely, a mapping relationship between the downlink timestamp and the TRP TEG, including: a downlink timestamp corresponding to a time instant when TRP Tx TEG and/or TRP Rx TEG changes.

The UE or gNB may also report TEG IDs before and after a timestamp corresponding to a time instant when the TEG changes.

Specifically, as shown in FIG. 6, the UE uses four SRS-Pos sample (measurement) values (i.e., R1 to R4) to calculate a measurement report #1. Each sample value in the FIG. 6 corresponds to one SRS-Pos resource or one SRS-Pos resource set. In order to facilitate the positioning server to obtain an association relationship between the SRS-Pos sample values used to calculate the measurement report and UE Tx TEGs, the UE reports, to the LMF, an uplink timestamp (and TEG IDs before and after the timestamp) corresponding to the time instant when UE Tx TEG, associated with the four SRS-Pos samples, changes (corresponding to the above-mentioned step of reporting the first association information, and the TEG identity numbers or the TEG index numbers to the LMF), that is, information of T5 in FIG. 6 (and TEG1, TEG2). It can be seen from FIG. 6 that the UE Tx TEG before T5 is TEG1 (corresponding to the TEG ID before the first timestamp), and the UE Tx TEG after T5 is TEG2 (corresponding to the TEG ID after the first timestamp). In this way, the LMF can obtain the information on the time instant when the UE Tx TEG, associated with the four SRS-Pos samples, changes, and TEG IDs before and after the change. After the LMF obtains the information, even if the LMF does not know specific transmitting time instants of the four SRS-Pos samples (that is, the LMF does not know T1 to T4), the LMF can also know transmission and reception timing errors corresponding to these SRS-Poses or these SRS-Pos sample values (because the LMF can estimate approximate positions of the four samples, determine the TEGs corresponding thereto, and then can obtain the corresponding transmission and reception timing error). Then, LMF can perform a compensation for the transmission and reception timing error to eliminate it, so as to improve the positioning precision.

By using the method in this example, an uplink timestamp corresponding to a time instant when UE Tx TEG changes, and UE Tx TEG IDs before and after the change can be indicated, to assist the LMF in determining an influence of a transmission and reception timing error on a measurement quantity of transmission and reception time difference of the UE or a measurement quantity of transmission and reception time difference of the gNB. In this way, the LMF can use the information to perform compensation for or adjustment on the positioning measurement quantity of the transmission and reception time difference of the UE or the transmission and reception time difference of the gNB, when calculating a position of UE, which prevents the accuracy of the UE position calculated by the LMF from decreasing due to a mismatch of the measurement quantity of the transmission and reception time difference of the UE and the measurement quantity of the transmission and reception time difference of the gNB, thereby improving the positioning accuracy of the system.

Part 3, UE or gNB provides timing adjustment information to LMF:

(1) the UE or a gNB provides the LMF with timing adjustment information, where the timing adjustment information includes a timing adjustment value configured by the gNB, or a timing adjustment value autonomously set by the UE. The TA information refers to time adjustment information for adjusting a transmitting time instant of an SRS-Pos. This is corresponding to, as mentioned above, that the timing adjustment information includes: a timing adjustment value configured by the network device, or a timing adjustment value set by the UE; where the timing adjustment information refers to time adjustment information for adjusting the transmitting time instant of the uplink positioning reference signal.

(2) The UE or gNB provides the LMF with a timing adjustment value corresponding to each of samples used to calculate a positioning measurement quantity.

Example of this part - Example 3 (UE or gNB provides timing adjustment information to LMF). In the solution: The UE and/or gNB reports the timing related information to the positioning server, to assist the positioning server (LMF) in positioning the UE. The timing related information includes: TA information. The TA information refers to time adjustment information for adjusting a transmitting time instant of SRS-Pos.

The UE or gNB provides timing adjustment information to the LMF, and the timing adjustment information includes a timing adjustment value configured by the gNB, or a timing adjustment value adjusted by the UE. The TA information refers to time adjustment information for adjusting a transmitting time instant of SRS-Pos.

The UE or gNB provides the LMF with a timing adjustment value corresponding to each of samples used to calculate a positioning measurement quantity.

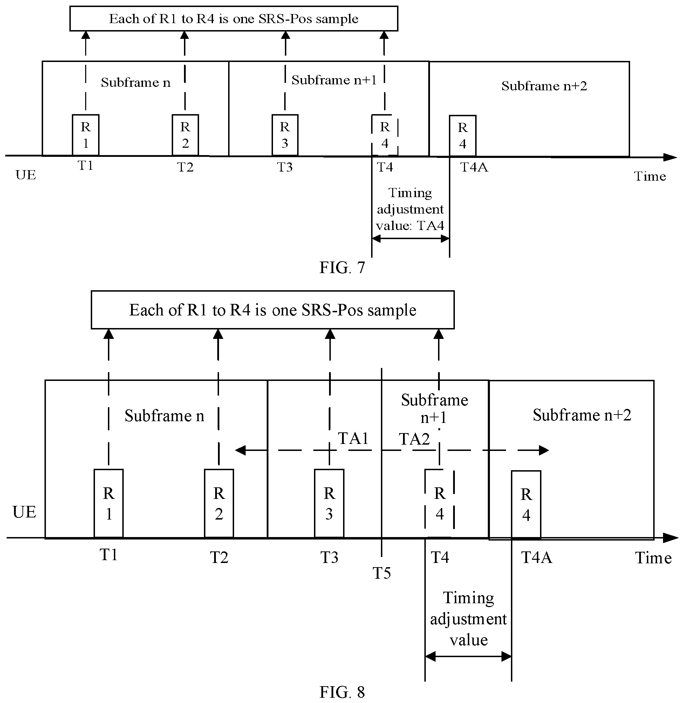

Specifically, as shown in FIG. 7, UE uses four SRS-Pos sample (measurement) values (i.e., R1 to R4) to calculate a measurement report #1. Each sample value in FIG. 7 corresponds to one SRS-Pos resource or one SRS-Pos resource set. It can be seen from FIG. 7 that timing adjustment values TA1 to TA3 for R1 to R3 are 0, as transmitting time instants of R1 to R3 are not changed, which are still T1 to T3. However, since a timing adjustment value TA4 for R4 is not 0, an actual transmitting time instant of R4 is T4A, where T4A = T4 + TA4. In order to facilitate the positioning server to obtain an association relationship between the SRS-Pos sample values used to calculate the measurement report and the timing adjustment value (corresponding to the above timing adjustment information), the UE reports timing adjustment values TA1 to TA4 associated with the four SRS-Pos samples to the LMF, that is, information of "timing adjustment value TA4" in FIG. 7 (because TA1 to TA3 are all zero, they are not labeled in FIG. 7).

The UE may provide the LMF with information on timing adjustment values corresponding to all sample values of SRS-Poses used to calculate the positioning measurement value and generate the measurement report #1 (corresponding to the above-mentioned timing adjustment value corresponding to each of sample values used to calculate the positioning measurement quantity). In this way, the LMF can obtain information on accurate actual transmitting time instants of these SRS-Pos samples, and then the LMF can perform compensation for a measurement quantity of transmission and reception time difference of the UE and a measurement quantity of transmission and reception time difference of the gNB, thereby improving the positioning accuracy.

By using the method in this example, the UE may provide the LMF with information of the timing adjustment value corresponding to each sample value of SRS-Pos used to calculate the positioning measurement value and generate the measurement report #1. In this way, the LMF can obtain information on accurate actual transmitting time instants of these SRS-Pos samples, and then the LMF can perform compensation for a measurement value of transmission and reception time difference of the UE and a measurement value of transmission and reception time difference of the gNB, thereby improving the positioning accuracy.

Part 4, UE or gNB provides timing adjustment change information to LMF:

(1) The UE and/or gNB provides the LMF with uplink timestamp information corresponding to a time instant when a timing adjustment changes and a changed amount for the timing adjustment at the time instant when the change occurs. The expression "the timing adjustment changes" means that a value of the timing adjustment for transmitting SRS-Pos by the UE is changed. This is corresponding to, as mentioned above, that the fourth information includes: uplink timestamp information corresponding to a time instant when timing adjustment information changes, and a changed amount for the timing adjustment at the time instant when the change occurs. The expression "the timing adjustment information changes" means that a timing adjustment value for transmitting the uplink positioning reference signal by the UE is changed.

Examples of this part - Example 4 (UE or gNB provides timing adjustment change information to LMF). In the solution:

The UE and/or gNB reports the timing related information to the positioning server, to assist the positioning server (LMF) in positioning the UE. The timing related information includes: TA information, or information associated with the TA information (corresponding to the above fourth information, which may also be interpreted as TA change information). The TA information refers to time adjustment information for adjusting a transmitting time instant of an SRS-Pos.

Specifically, as shown in FIG. 8, UE uses four SRS-Pos sample (measurement) values (i.e., R1 to R4) to calculate and obtain a measurement report #1. Each sample value in FIG. 8 corresponds to one SRS-Pos resource or one SRS-Pos resource set. In order to facilitate the positioning server to obtain the association relationship between the SRS-Pos sample values used to calculate the measurement report and the timing adjustment values, the UE reports, to the LMF, an uplink timestamp corresponding to a time instant when a timing adjustment value associated with the four SRS-Pos samples changes (and a changed amount for the timing adjustment at the moment of change). That is, information of T5 in FIG. 8 (and a difference between TA2 and TA1). This is corresponding to, as mentioned above, the step of reporting, to the LMF, the uplink timestamp information corresponding to the time instant when the timing adjustment information changes, and the changed amount of the timing adjustment at the time instant when the change occurs. It can be seen from FIG. 8 that a timing adjustment value before T5 is TA1, and a timing adjustment value after T5 is TA2 (which is obtained according to the TA1 and a difference). In this way, the LMF can obtain information on the time instant when the timing adjustment value associated with the four SRS-Pos samples changes, and the timing adjustment values before and after the change (TA1 for T1 to T3, and TA1 is 0, so it is not shown in FIG. 8; TA2 for T4, and after the adjustment, R4 is shifted from time instant T4 to time instant T4A, and a difference between time instant T4 and time instant T4A is equal to the timing adjustment value TA2). After the LMF obtains the information, the LMF can know timing adjustment values corresponding to these SRS-Pos sample values, and then the LMF can perform a compensation according to the timing adjustment values, thereby improving the positioning accuracy.

By using the method in this example, the UE can provide the LMF with timing adjustment change information corresponding to sample values of SRS-Pos used to calculate the positioning measurement value and generate the measurement report #1. Then, the LMF can obtain accurate timing adjustment values of these SRS-Pos samples, and the LMF can perform compensation for a measurement value of transmission and reception time difference of the UE and a measurement value of transmission and reception time difference of the gNB, thereby improving the positioning accuracy.

Part 5, when calculating a measurement value of transmission and reception time difference by UE or TRP (included in gNB), timing adjustment processing on all samples are ensured to be the same.

(1) When UE calculates a measurement value of transmission and reception time difference of the UE by using multiple sample values of the transmission and reception time difference of the UE, the UE is expected that SRS transmitting times corresponding to all sample values for calculating the transmission and reception time difference of the UE have not been subjected to any timing adjustment; and all the sample values of the transmission and reception time difference of the UE belong to the same measurement report or the same measurement instance. This corresponds to, as mentioned above, that the UE is expected that no timing adjustment has been performed on transmitting times of uplink positioning reference signals corresponding to all sample values used for calculating a measurement value of transmission and reception time difference of the UE.

(2) When UE calculates a measurement value of transmission and reception time difference of the UE by using multiple sample values of the transmission and reception time difference of the UE, the UE is expected that SRS transmitting times corresponding to all sample values for calculating the transmission and reception time difference of the UE have been subjected to a same timing adjustment; and all the sample values of the transmission and reception time difference of the UE belong to the same measurement report or the same measurement instance. This corresponds to, as mentioned above, that the UE is expected that a same timing adjustment has been performed on transmitting times of uplink positioning reference signals corresponding to all sample values used for calculating a measurement value of transmission and reception time difference of the UE.

(3) When gNB calculates a measurement value of transmission and reception time difference of the gNB by using multiple sample values of the transmission and reception time difference of the gNB, the gNB is expected that SRS transmitting times corresponding to all sample values for calculating the transmission and reception time difference of the gNB have not been subjected to any timing adjustment; and all the sample values of the transmission and reception time difference of the gNB belong to the same measurement report or the same measurement instance. This corresponds to, as mentioned above, that the gNB is expected that no timing adjustment has been performed on transmitting times of uplink positioning reference signals corresponding to all sample values used for calculating a measurement value of transmission and reception time difference of the gNB.

(4) When gNB calculates a measurement value of transmission and reception time difference of the gNB by using multiple sample values of the transmission and reception time difference of the gNB, the gNB is expected that SRS transmitting times corresponding to all sample values for calculating the transmission and reception time difference of the gNB have been subjected to a same timing adjustment; and all the sample values of the transmission and reception time difference of the gNB belong to the same measurement report or the same measurement instance. This corresponds to, as mentioned above, that the gNB is expected that a same timing adjustment has been performed on transmitting times of uplink positioning reference signals corresponding to all sample values used for calculating a measurement value of transmission and reception time difference of the gNB.

Example of this part - Example 5 (when calculating a measurement value of transmission and reception time difference by UE or TRP, timing adjustment processing on all samples are ensured to be the same). In the solution: UE and/or gNB reports the timing related information to the positioning server, to assist the positioning server (LMF) in positioning the UE. The timing related information includes: time information associated with a transmitting time instant or a receiving time instant of an uplink positioning reference signal (SRS-Pos) or a downlink positioning reference signal (DL-PRS) (corresponding to the first time information and the second time information mentioned above), or information associated with a timing error group (TEG) (corresponding to the third information mentioned above), or TA information, or information associated with the TA information (corresponding to the fourth information mentioned above, which may be also interpreted as TA change information). The TA information refers to time adjustment information for adjusting the transmitting time instant of the SRS-Pos.

(1) From the perspective of UE, when UE calculates a measurement value of transmission and reception time difference, there are two possible solutions to ensure that the timing adjustment processing on all samples is the same.

Solution 1-1: when the UE calculates a measurement value of transmission and reception time difference of the UE by using multiple sample values of the transmission and reception time difference of the UE, the UE is expected that SRS transmitting times corresponding to all sample values used for calculating the transmission and reception time difference of the UE have not been subjected to any timing adjustment; and all the sample values of the transmission and reception time difference of the UE belong to the same measurement report or the same measurement instance.

Alternatively, Solution 1-2: when UE calculates a measurement value of transmission and reception time difference of the UE by using multiple sample values of the transmission and reception time difference of the UE, the UE is expected that SRS transmitting times corresponding to all sample values used for calculating the transmission and reception time difference of the UE have been subjected to a same timing adjustment; and all the sample values of the transmission and reception time difference of the UE belong to the same measurement report or the same measurement instance.

(2) From the perspective of gNB or TRP, when the gNB or TRP calculates a measurement value of transmission and reception time difference, there are also two possible solutions to ensure that the timing adjustment processing on all samples is the same.

Solution 2-1: when gNB calculates a measurement value of transmission and reception time difference of the gNB by using multiple sample values of the transmission and reception time difference of the gNB, the gNB is expected that SRS transmitting times corresponding to all sample values used for calculating the transmission and reception time difference of the gNB have not been subjected to any timing adjustment; and all the sample values of the transmission and reception time difference of the gNB belong to the same measurement report or the same measurement instance. The gNB here may also be substituted by TRP, which is not limited here.

Solution 2-2: when gNB calculates a measurement value of transmission and reception time difference of the gNB by using multiple sample values of the transmission and reception time difference of the gNB, the gNB is expected that SRS transmitting times corresponding to all sample values used for calculating the transmission and reception time difference of the gNB have been subjected to a same timing adjustment; and all the sample values of the transmission and reception time difference of the gNB belong to the same measurement report or the same measurement instance. The gNB here may also be substituted by TRP, which is not limited here.

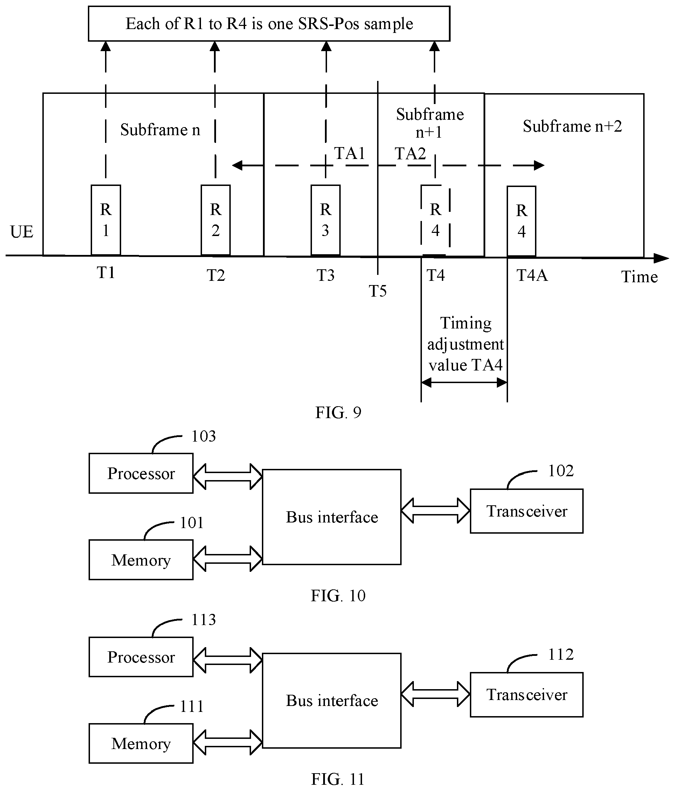

Specifically, as shown in FIG. 9, it is assumed that UE adopts the solution 1-1 to calculate a transmission and reception time difference, and generates a measurement report #1. TA1=0, TA2=TA4 (T5 corresponds to a time instant when TA changes). Since R1 to R3 are SRS-Pos sample values that have not been subjected to any timing adjustment, and R4 is an SRS-Pos sample value that has been subjected to the timing adjustment (adjusted from time instant T4 to time instant T4A), the UE can only use R1 to R3 to calculate the measurement value of transmission and reception time difference and obtain the measurement report #1, but cannot use R4, so as to ensure that no timing adjustment has been performed on SRS transmitting times corresponding to all sample values used for calculating the transmission and reception time difference of the UE by the UE.

By using the method in this example, when UE or TRP calculates a measurement value of transmission and reception time difference, the timing adjustment processing on all SRS-Pos samples is ensured to be the same. In this way, after the LMF obtains the measurement report (carrying the measurement value of transmission and reception time difference) calculated based on the sample values, the LMF can determine that timing adjustments on all the sample values in the measurement report are the same, and then the LMF can perform a compensation for a measurement value of transmission and reception time difference of the UE and a measurement value of transmission and reception time difference of the gNB, thereby improving the positioning accuracy. In addition, there is no need to report a timing adjustment amount in this solution, and there is no additional signaling overhead. The measurement value of transmission and reception time difference carried in the measurement report may be a measurement value of transmission and reception time difference of UE, a measurement value of transmission and reception time difference of gNB, or a measurement value of transmission and reception time difference of TRP.

Part 6, additionally provision of indication information, which is used to indicate whether a timing adjustment is performed on samples used for calculating a measurement value of transmission and reception time difference of UE or gNB.

(1) When UE or gNB reports a measurement value of transmission and reception time difference of the UE or the gNB to the LMF, the UE or the gNB also reports first indication information, and the first indication information is used to indicate whether a sample used by the UE or the gNB to calculate the measurement value of the transmission and reception time difference of the UE or the gNB has been subjected to a timing adjustment.
(2) The LMF transmits second indication information to the UE or the gNB, the second indication information is used to indicate whether a sample used by the UE or the gNB to calculate the measurement value of the transmission and reception time difference of the UE or the gNB is to be subjected to a timing adjustment.

Example of the part - Example 6 (additionally provision of indication information, which is used to indicate whether a sample used to calculate a measurement value of transmission and reception time difference of the UE or the gNB has been subjected to a timing adjustment). In the solution:

To ensure that timing adjustment processing on all samples to be the same in Example 5 when UE and TRP calculates a measurement value of transmission and reception time difference, indication information may be additionally provided in the related solutions 1-1, 1-2, 2-1 and 2-2, the indication information is used to indicate whether a timing adjustment has been performed on a sample used to calculate the measurement value of the transmission and reception time difference of the UE or the gNB.

Specifically, the solution is as follows.

When reporting the measurement value of transmission and reception time difference of the UE or the gNB to the LMF, the UE or gNB also reports first indication information, and the first indication information indicates whether a timing adjustment has been performed on samples used by the UE or the gNB to calculate the measurement value of the transmission and reception time difference of the UE or the gNB.

The LMF issues second indication information to the UE or the gNB, and the second indication information indicates whether a timing adjustment is to be performed on the samples used by the UE or the gNB for calculating the measurement value of transmission and reception time difference of the UE or the gNB.

The first indication information is transmitted from the UE or the gNB to the LMF. That is to say, the UE or the gNB may determine whether to perform the timing adjustment, and then may transmit, to the LMF, information on whether the timing adjustment has been performed. The second indication information is transmitted from the LMF to the UE or the gNB. That is to say, the LMF may determine whether to perform the timing adjustment, and then may transmit, to the UE or the gNB, information on whether the timing adjustment is to be performed.

By using the method in this example, whether to perform the timing adjustment can be flexibly determined by the UE, the gNB or the LMF. Then, the timing adjustment information can be transmitted to the peer end. In this way, the LMF can know information on whether the timing adjustment has been performed on the measurement report. This may be favorable for subsequently compensating for, by the LMF, the measurement value of transmission and reception time difference of the UE or the gNB, so as to improve the positioning accuracy.

It should be noted here that similar parts in the above examples can be referred to each other, which will not be repeated here.

In addition, the above examples mentioned in the embodiments of the present disclosure can be used in any arbitrary combination, for example, be used in a combination of Example 1 and Example 3 (that is, UE provides the uplink timestamp information and the timing adjustment information to LMF).

Specifically, referring to FIG. 5, the UE uses four SRS-Pos sample (measurement) values (i.e., R1 to R4, each of which corresponds to one SRS-Pos sample) for calculation to obtain a measurement report #1. Each of the sample values in FIG. 5 corresponds to one SRS-Pos resource or one SRS-Pos resource set. In order to facilitate the positioning server to obtain time information of the SRS-Poses used for calculating the measurement report, the UE reports subframes or slots where the four SRS-Pos are located (corresponding to the above-mentioned first time information) to LMF. Namely, the UE reports subframe information of subframe n or subframe n+1 to the LMF (specifically, a subframe or a slot where a certain SRS-Pos is located may be used as a basis for determining a subframe or a slot where an SRS-Pos adjacent to the certain SRS-Pos is located). However, only reporting the information of the subframe where the SRS-Pos is located may cause a relatively large granularity. In order to obtain a more precise time information reporting, the UE may provide the LMF with uplink timestamp information corresponding to each sample value of the SRS-Pos used for calculating a positioning measurement value and generating the measurement report #1, namely, information of T1 to T4 in FIG. 5, and as a result, the LMF can obtain more precise time information. After obtaining the time information, the LMF can obtain transmission and reception timing errors corresponding to these SRS-Poses or these SRS-Pos sample values, in accordance with a mapping relationship between time information and transmission and reception timing errors (which may be stored locally in the LMF), and then the LMF can perform compensation for the transmission and reception timing error to eliminate it, thereby improving the positioning accuracy.

Furthermore, referring to FIG. 7 for details, the UE uses four SRS-Pos sample (measurement) values (i.e., R1 to R4) to calculate and obtain a measurement report #1. Each sample value in FIG. 7 corresponds to one SRS-Pos resource or one SRS-Pos resource set. Exemplarily, the four sample values used by the UE may also correspond to different timing adjustment values, for example, timing adjustment values TA1 to TA3 for R1 to R3 are 0, so that transmitting time instants of R1 to R3 do not change and are still T1 to T3. However, since a timing adjustment value TA4 for R4 is not 0, an actual transmitting time instant of R4 is T4A, where T4A = T4 + TA4. In order to facilitate the positioning server to obtain an association relationship between the SRS-Pos sample values used to calculate the measurement report and timing adjustment values (corresponding to the above mentioned timing adjustment information), the UE reports timing adjustment values TA1 to TA4 associated with the four SRS-Pos samples to the LMF, that is, information of "timing adjustment value TA4" in FIG. 7 (As TA1 to TA3 are all 0, they are not marked in FIG. 7). The UE may provide the LMF with information of the timing adjustment value corresponding to each sample value of SRS-Pos used to calculate the positioning measurement value and generate the measurement report #1 (corresponding to the above-mentioned timing adjustment value corresponding to each of samples used to calculate a positioning measurement quantity). Information on actual transmitting time of the SRS-Pos sample can be determined more accurately based on the reported subframe or slot corresponding to the four SRS-Pos sample (measurement) values, the uplink timestamp information corresponding to each sample value of SRS-Pos, and information on the timing adjustment value corresponding to each sample value of SRS-Pos. As such, the LMF can obtain information on accurate actual transmitting time instants of these SRS-Pos samples, and then the LMF can compensate for a measurement value of transmission and reception time difference of the UE and a measurement value of transmission and reception time difference of the gNB, thereby improving the positioning accuracy.

By adopting the method using this combination, timestamp information and time information associated with transmitting time instants of positioning reference signals may be indicated, to assist the LMF in determining an influence of a transmission and reception timing error on a measurement quantity of transmission and reception time difference of the UE or a measurement quantity of transmission and reception time difference of the gNB. As a result, the LMF can use such information to perform compensation for or adjustment on the positioning measurement quantity of the transmission and reception time difference of the UE or the transmission and reception time difference of the gNB when calculating a position of UE, which can prevent the accuracy of the UE position calculated by the LMF from decreasing due to a mismatch of the measurement quantity of the transmission and reception time difference of the UE and the measurement quantity of the transmission and reception time difference of the gNB, thereby improving the positioning accuracy of the system.

Further, the UE may provide the LMF with information of the timing adjustment value corresponding to each sample value of SRS-Pos used to calculate the positioning measurement value and generate the measurement report #1. In this way, the LMF can obtain information on accurate actual transmitting times of these SRS-Pos samples, and then the LMF can compensate for the measurement value of the transmission and reception time difference of the UE and the measurement value of the transmission and reception time difference of the gNB, thereby improving the positioning accuracy.

It should be noted here that the timing adjustment as mentioned above may also be a timing advance adjustment. Operations performed by the UE in the above-mentioned examples may also be implemented by the base station, which will not be repeated here.

It can be seen from the above that, in the solutions provided by the embodiments of the present disclosure, time information associated with transmitting time instant or receiving time instant of positioning reference signal, or TA information, or information associated with TEG or TA may be indicated, to assist the LMF in determining an influence of a transmission and reception timing error or an uplink timing adjustment on a measurement quantity of transmission and reception time difference of the UE or a measurement quantity of transmission and reception time difference of the gNB. In this way, the LMF can use the information to perform compensation for or adjustment on the positioning measurement quantity of the transmission and reception time difference of the UE or the positioning measurement quantity of the transmission and reception time difference of the gNB when calculating a position of UE, which avoids a decreasing in the accuracy of the UE position calculated by the LMF due to a mismatch of the measurement quantity of the transmission and reception time difference of the UE and the measurement quantity of the transmission and reception time difference of the gNB, thereby improving the positioning accuracy of the system.

An embodiment of the present disclosure further provides a location management function server, as shown in FIG. 10, which includes a memory 101, a transceiver 102, and a processor 103.

The memory 101 is configured to store a computer program; the transceiver 102 is configured to transmit and/or receive data under the control of the processor 103; the processor is configured to read the computer program in the memory 101 to perform the following operations:

receiving timing related information transmitted by a communications device through the transceiver 102;
determining a position of UE based on the timing related information;
where the communications device is the UE or a network device; the network device includes a base station or a transmission and reception point (TRP); and the timing related information includes at least one of
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

The location management function server provided by the embodiments of the present disclosure receives the timing related information transmitted by the communications device, and determines the position of UE based on the timing related information. The communications device is the UE or a network device; the network device includes a base station or a transmission and reception point (TRP). The timing related information includes at least one of first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. In this way, the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB) can be determined accurately and precisely. As a result, such information can be used to compensate or adjust the (positioning) measurement quantity of the transmission and reception time difference when calculating the position of the UE, which can prevent the accuracy of the calculated position of the UE from decreasing due to a mismatch of the measurement quantity of the transmission and reception time difference of the UE and the measurement quantity of the transmission and reception time difference of the gNB, or the uplink timing adjustment of the UE, thereby improving the positioning accuracy of the system.

Specifically, the transceiver 102 is configured to receive and transmit data under the control of the processor 103.

In FIG. 10, the bus architecture may include any number of interconnected buses and bridges. Specifically, various circuits of one or more processors represented by the processor 103 and a memory represented by the memory 101 are linked together. The bus architecture may also link various other circuits such as peripheral devices, voltage regulators, power management circuits, etc., which are well-known in the art, and therefore, no further descriptions are provided herein. The bus interface provides an interface. The transceiver 102 may be a plurality of elements, that is, include a transmitter and a receiver, and provide a unit for communicating with various other devices on a transmission medium. The processor 103 is responsible for managing the bus architecture and general processing, and the memory 101 can store data used by the processor 103 when performing operations.

The processor 103 may be a central processing unit (Central Processing Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor can also adopt a multi-core architecture.

The first time information may include uplink timestamp information, and the uplink timestamp information includes: information on a subframe or a slot where the uplink positioning reference signal transmitted by the UE is located; and/or, the second time information includes: downlink timestamp information, and the downlink timestamp information includes: information on a subframe or a slot where the downlink positioning reference signal transmitted by the network device is located.

In an embodiment of the present disclosure, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set. Specifically, one sample value refers to a measurement value corresponding to one uplink positioning reference signal resource or one uplink positioning reference signal resource set. Optionally or additionally, the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set. Specifically, one sample value refers to a measurement value corresponding to a downlink positioning reference signal resource or a downlink positioning reference signal resource set.

The third information may include at least one of: first association information between timestamp information and a TEG of the UE; second association information between timestamp information and a TEG of the network device, where the first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In an embodiment of the present disclosure, the third information further includes: a TEG identity number before and after a first timestamp; or, a TEG index number before and after a first timestamp; the first timestamp is a timestamp corresponding to a time instant when the TEG changes.

That "the TEG changes" means that the TEG identity number or the TEG index number is updated.

In an embodiment of the present disclosure, the timing adjustment information includes: a timing adjustment value configured by the network device, or a timing adjustment value set by the UE; where the timing adjustment information refers to time adjustment information for adjusting the transmitting time instant of the uplink positioning reference signal.

The timing adjustment information may include: a timing adjustment value corresponding to each of samples used to calculate a positioning measurement quantity.

In an embodiment of the present disclosure, the fourth information includes: uplink timestamp information corresponding to a time instant when the timing adjustment information changes, and a changed amount for timing adjustment at the time instant when the change occurs or a timing adjustment value before and after the time instant when the change occurs. That "the timing adjustment information changes" refers to the timing adjustment value of the uplink positioning reference signal transmitted by the UE changes.

Optionally, the operations further include: receiving, through the transceiver, a measurement value of transmission and reception time difference transmitted by the communications device; where the determining the position of the UE based on the timing related information includes: determining the position of the UE based on the timing related information and the measurement value of transmission and reception time difference.

In an embodiment of the present disclosure, the communications device is a terminal (UE) or a base station (gNB); the UE is enabled that no timing adjustment has been performed on transmitting times of uplink positioning reference signals corresponding to all sample values used for calculating a measurement value of transmission and reception time difference of the UE; or, the UE is enabled that a same timing adjustment has been performed on transmitting times of uplink positioning reference signals corresponding to all sample values used for calculating a measurement value of transmission and reception time difference of the UE; or, the gNB is enabled that no timing adjustment has been performed on transmitting times of uplink positioning reference signals corresponding to all sample values used for calculating a measurement value of transmission and reception time difference of the gNB; or, the gNB is enabled that a same timing adjustment has been performed on transmitting times of uplink positioning reference signals corresponding to all sample values used for calculating a measurement value of transmission and reception time difference of the gNB.

Optionally, the operations further include: receiving, through the transceiver, first indication information transmitted by the communications device; where the first indication information is used to indicate whether there is a timing adjustment in (which may also be interpreted as whether a timing adjustment has been performed on) a sample that is used by the communications device for calculating a measurement value of transmission and reception time difference; and/or, transmitting, through the transceiver, second indication information to the communications device, where the second indication information is used to indicate whether a timing adjustment is to be performed on a sample that is used by the communications device for calculating a measurement value of transmission and reception time difference.

It should be noted here that the location management function server provided by the embodiment of the present disclosure can implement all the method steps implemented in the above method embodiments which are applied to the location management function server, and can achieve the same technical effects, and the descriptions and beneficial effects of which will not be repeated here.

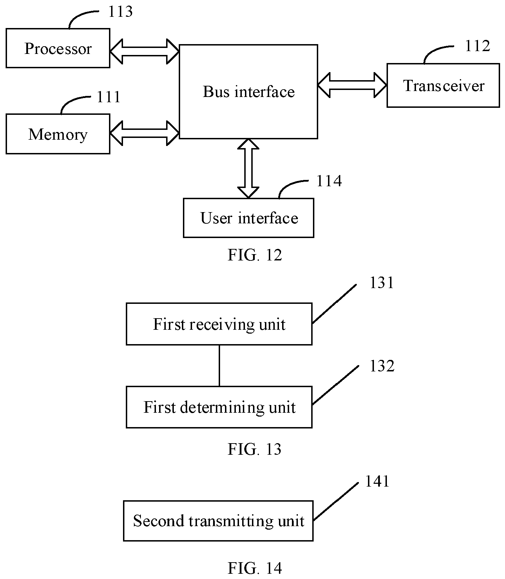

An embodiment of the present disclosure further provides a communications device, as shown in FIG. 11 and FIG. 12, the communications device includes a memory 111, a transceiver 112, and a processor 113:

The memory 111 is configured to store a computer program; the transceiver 112 is configured to transmit and/or receive data under the control of the processor 113; the processor 113 is configured to read the computer program in the memory 111 to perform the following operations:

transmitting, through the transceiver 112, timing related information to a location management function server, where the timing related information is used by the location management function server to determine a position of UE; where the communications device is: the UE or a network device; the network device includes a base station or a transmission and reception point (TRP); the timing related information includes at least one of:
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

The communications device provided in the embodiments of the present disclosure transmits the timing related information to the location management function server, such that the timing related information is used by the location management function server to determine a position of UE. The communications device is the UE or a network device; the network device includes a base station or a transmission and reception point (TRP). The timing related information includes at least one of: first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. In this way, the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB) can be determined accurately and precisely. As a result, the information can be used to compensate for or adjust the (positioning) measurement quantity of the transmission and reception time difference when calculating the position of the UE, which can prevent the accuracy of the calculated position of UE from decreasing due to a mismatch of the measurement quantity of the transmission and reception time difference of the UE and the measurement quantity of the transmission and reception time difference of the gNB, or the uplink timing adjustment of the UE, thereby improving the positioning accuracy of the system.

Specifically, in a case that the communications device is implemented as a network device, as shown in FIG. 11, the transceiver 112 is configured to receive and transmit data under the control of the processor 113.

In FIG. 11, the bus architecture may include any number of interconnected buses and bridges. Specifically, various circuits of one or more processors represented by the processor 113 and a memory represented by the memory 111 are linked together. The bus architecture may also link various other circuits such as peripheral devices, voltage regulators, power management circuits, etc., which are well-known in the art, and therefore, no further descriptions are provided herein. The bus interface provides an interface. The transceiver 112 may be a plurality of elements, that is, include a transmitter and a receiver, and provide a unit for communicating with various other devices on a transmission medium. The transmission medium includes a wireless channel, a wired channel, an optical cable, and other transmission media. The processor 113 is responsible for managing the bus architecture and general processing, and the memory 111 can store data used by the processor 113 when performing operations.

The processor 113 may be a central processing unit (Central Processing Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), and the processor can also adopt a multi-core architecture.

In the case where the communications device is implemented as a terminal, as shown in FIG. 12, a transceiver 112 is configured to receive and transmit data under the control of a processor 113.

In FIG. 12, the bus architecture may include any number of interconnected buses and bridges. Specifically, various circuits of one or more processors represented by the processor 113 and a memory represented by the memory 111 are linked together. The bus architecture may also link various other circuits such as peripheral devices, voltage regulators, power management circuits, etc., which are well-known in the art, and therefore, no further descriptions are provided herein. The bus interface provides an interface. The transceiver 112 may be a plurality of elements, that is, include a transmitter and a receiver, and provide a unit for communicating with various other devices on a transmission medium. The transmission medium includes a wireless channel, a wired channel, an optical cable, and other transmission media. For different user equipment, the user interface 114 may also be an interface capable of externally or internally connecting to required equipment. The connected equipment includes but not limited to a keypad, a display, a speaker, a microphone, a joystick, and the like.

The processor 113 is configured for managing the bus architecture and general processing, and the memory 111 can store data used by the processor 113 when performing operations.

Optionally, the processor 113 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The processor is configured to invoke the computer program stored in the memory, to execute any one of the methods provided by the embodiments of the present disclosure according to the obtained executable instructions. The processor and the memory may also be physically separated.

The first time information may include uplink timestamp information, and the uplink timestamp information includes: information on a subframe or a slot where the uplink positioning reference signal transmitted by the UE is located; and/or, the second time information includes: downlink timestamp information, and the downlink timestamp information includes: information on a subframe or a slot where the downlink positioning reference signal transmitted by the network device is located.

In an embodiment of the present disclosure, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set. Specifically, one sample value refers to a measurement value corresponding to one uplink positioning reference signal resource or one uplink positioning reference signal resource set. Optionally or additionally, the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set. Specifically, one sample value refers to a measurement value corresponding to a downlink positioning reference signal resource or a downlink positioning reference signal resource set.

The third information may include at least one of: first association information between timestamp information and a TEG of the UE; second association information between timestamp information and a TEG of the network device, where the first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In an embodiment of the present disclosure, the third information further includes: a TEG identity number before and after a first timestamp; or, a TEG index number before and after a first timestamp; the first timestamp is a timestamp corresponding to a time instant when the TEG changes.

That "the TEG changes" means that the TEG identity number or the TEG index number is updated.

In an embodiment of the present disclosure, the timing adjustment information includes: a timing adjustment value configured by the network device, or a timing adjustment value set by the UE; where the timing adjustment information refers to time adjustment information for adjusting the transmitting time instant of the uplink positioning reference signal.

Optionally, the timing adjustment information includes: a timing adjustment value corresponding to each of samples used to calculate a positioning measurement quantity.

In an embodiment of the present disclosure, the fourth information includes: uplink timestamp information corresponding to a time instant when the timing adjustment information changes, and a changed amount for timing adjustment at the time instant when the change occurs or a timing adjustment value before and after the time instant when the change occurs; and that "the timing adjustment information changes" refers to the timing adjustment value of the uplink positioning reference signal transmitted by the UE.

Optionally, the operations further include: obtaining sample values for transmission and reception time difference that have same timing adjustment information; obtaining a measurement value of transmission and reception time difference based on at least some of the obtained sample values; and transmitting, through the transceiver, the measurement value of transmission and reception time difference to the location management function server.

In the embodiment of the present disclosure, the operations further include: in a case that the communications device is the UE, determining that no timing adjustment has been performed on transmitting times of uplink positioning reference signals corresponding to all sample values used for calculating a measurement value of transmission and reception time difference of the UE; or, in a case that the communications device is the UE, determining that a same timing adjustment has been performed on transmitting times of uplink positioning reference signals corresponding to all sample values used for calculating a measurement value of transmission and reception time difference of the UE; or, in a case that the communications device is the gNB, determining that no timing adjustment has been performed on transmitting times of uplink positioning reference signals corresponding to all sample values used for calculating a measurement value of transmission and reception time difference of the gNB; or, in a case that the communications device is the gNB, determining that a same timing adjustment has been performed on transmitting times of uplink positioning reference signals corresponding to all sample values used for calculating a measurement value of transmission and reception time difference of the gNB.

In an embodiment of the disclosure, the operations further include: transmitting, through the transceiver, first indication information to the location management function server, where the first indication information is used to indicate whether a timing adjustment is performed on a sample that is used by the communications device for calculating a measurement value of transmission and reception time difference; and/or, transmitting, through the transceiver, second indication information transmitted by the location management function server, where the second indication information is used to indicate whether a timing adjustment is to be performed on a sample that is used by the communications device for calculating a measurement value of transmission and reception time difference.

It should be noted here that the communications device provided by the embodiment of the present disclosure can implement all the method steps implemented in the above method embodiments which are applied to the communications device, and can achieve the same technical effects, and the descriptions and beneficial effects of which will not be repeated here in detail.

An embodiment of the present disclosure further provides an information processing apparatus, which is applied to a location management function server. As shown in FIG. 13, the device includes:

a first receiving unit 131, configured to receive timing related information transmitted by a communications device; and
a first determining unit 132, configured to determine a position of UE based on the timing related information,
where the communications device is the UE or a network device; the network device includes a base station or a transmission and reception point (TRP); and
the timing related information includes at least one of:
first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information;
fourth information associated with the timing adjustment information.

The information processing apparatus provided in the embodiments of the present disclosure receives the timing related information transmitted by the communications device and determines the position of UE based on the timing related information. The communications device is the UE or a network device; the network device includes a base station or a transmission and reception point (TRP). The timing related information includes at least one of first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. In this way, the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB) can be determined accurately and precisely.

Thus, the information can be used to compensate for or adjust the (positioning) measurement quantity of the transmission and reception time difference when calculating the position of the UE, which can prevent the accuracy of the calculated position of UE from decreasing due to a mismatch of the measurement quantity of the transmission and reception time difference of the UE and the measurement quantity of the transmission and reception time difference of the gNB, or the uplink timing adjustment of the UE, thereby improving the positioning accuracy of the system.

The first time information may include uplink timestamp information, and the uplink timestamp information includes: information on a subframe or a slot where the uplink positioning reference signal transmitted by the UE is located; and/or, the second time information includes: downlink timestamp information, and the downlink timestamp information includes: information on a subframe or a slot where the downlink positioning reference signal transmitted by the network device is located.

In an embodiment of the present disclosure, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set. Specifically, one sample value refers to a measurement value corresponding to one uplink positioning reference signal resource or one uplink positioning reference signal resource set. Optionally or additionally, the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set. Specifically, one sample value refers to a measurement value corresponding to a downlink positioning reference signal resource or a downlink positioning reference signal resource set.

The third information may include at least one of first association information between timestamp information and a TEG of the UE; second association information between timestamp information and a TEG of the network device, where the first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In an embodiment of the present disclosure, the third information further includes: a TEG identity number before and after a first timestamp; or, a TEG index number before and after a first timestamp; the first timestamp is a timestamp corresponding to a time instant when the TEG changes.

That "the TEG changes" means that the TEG identity number or the TEG index number is updated.

In an embodiment of the present disclosure, the timing adjustment information includes: a timing adjustment value configured by the network device, or a timing adjustment value set by the UE; where the timing adjustment information refers to time adjustment information for adjusting the transmitting time instant of the uplink positioning reference signal.

Optionally, the timing adjustment information includes: a timing adjustment value corresponding to each of samples used to calculate a positioning measurement quantity.

In an embodiment of the present disclosure, the fourth information includes: uplink timestamp information corresponding to a time instant when the timing adjustment information changes, and a changed amount for timing adjustment at the time instant when the change occurs or a timing adjustment value before and after the time instant when the change occurs; and that "the timing adjustment information changes" refers to the timing adjustment value of the uplink positioning reference signal transmitted by the UE changes.

The apparatus may further include: a second receiving unit, configured to receive a measurement value of transmission and reception time difference transmitted by the communications device; where the determining the position of the UE based on the timing related information includes: determining the position of the UE based on the timing related information and the measurement value of transmission and reception time difference.

In an embodiment of the disclosure, the communications device is a terminal (UE) or a base station (gNB); the UE is expected that no timing adjustment has been performed on transmitting times of uplink positioning reference signals corresponding to all sample values used for calculating a measurement value of transmission and reception time difference of the UE; or, the UE is expected that a same timing adjustment has been performed on transmitting times of uplink positioning reference signals corresponding to all sample values used for calculating a measurement value of transmission and reception time difference of the UE; or, the gNB is expected that no timing adjustment has been performed on transmitting times of uplink positioning reference signals corresponding to all sample values used for calculating a measurement value of transmission and reception time difference of the gNB; or, the gNB is expected that a same timing adjustment has been performed on transmitting times of uplink positioning reference signals corresponding to all sample values used for calculating a measurement value of transmission and reception time difference of the gNB.

Furthermore, the information processing apparatus further includes: a third receiving unit, configured to receive first indication information transmitted by the communications device, where the first indication information is used to indicate whether a timing adjustment is performed on a sample that is used by the communications device for calculating a measurement value of transmission and reception time difference; and/or, a first transmitting unit, configured to transmit second indication information to the communications device, where the second indication information is used to indicate whether a timing adjustment is to be performed on a sample that is used by the communications device for calculating a measurement value of transmission and reception time difference.

It should be noted that the apparatus provided by the embodiment of the present disclosure can implement all the method steps implemented in the method embodiments which are applied to the location management function server, and can achieve the same technical effects, and the descriptions and beneficial effects of which will not be repeated here in detail.

An embodiment of the present disclosure further provides an information processing apparatus, which is applied to a communications device. As shown in FIG. 14, the apparatus includes:

a second transmitting unit 141, configured to transmit timing related information to a location management function server, where the timing related information is used by the location management function server to determine a position of UE; where the communications device is: the UE or a network device; the network device includes a base station or a transmission and reception point (TRP); the timing related information includes at least one of:

first time information associated with a transmitting time instant or a receiving time instant of an uplink positioning reference signal;

second time information associated with a transmitting time instant or a receiving time instant of a downlink positioning reference signal;

third information associated with a timing error group (TEG);

timing adjustment information;

fourth information associated with the timing adjustment information.

The information processing apparatus provided by the embodiments of the present disclosure transmits the timing related information to the location management function server, where the timing related information is used by the location management function server to determine the position of UE. The communications device is the UE or a network device; the network device includes a base station or a transmission and reception point (TRP). The timing related information includes at least one of first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; fourth information associated with the timing adjustment information. In this way, the influence of the transmission and reception timing error or the uplink timing adjustment on a measurement quantity of a transmission and reception time difference (for example, a measurement quantity of transmission and reception time difference of the UE or a measurement quantity of transmission and reception time difference of the gNB) can be determined accurately and precisely. Thus, the information can be used to compensate for or adjust the (positioning) measurement quantity of the transmission and reception time difference when calculating the position of the UE, which avoids a decreasing in the accuracy of the calculated UE position due to a mismatch of the measurement quantity of the transmission and reception time difference of the UE and the measurement quantity of the transmission and reception time difference of the gNB, or due to the uplink timing adjustment of the UE, thereby improving the positioning accuracy of the system.

The first time information may include uplink timestamp information, and the uplink timestamp information includes: information on a subframe or a slot where the uplink positioning reference signal transmitted by the UE is located; and/or, the second time information includes: downlink timestamp information, and the downlink timestamp information includes: information on a subframe or a slot where the downlink positioning reference signal transmitted by the network device is located.

In an embodiment of the present disclosure, the uplink timestamp information includes: uplink timestamp information corresponding to a sample value of the uplink positioning reference signal, where the uplink positioning reference signal is used to calculate a positioning measurement value and generate a measurement report or a measurement instance; one sample value corresponds to one uplink positioning reference signal resource or one uplink positioning reference signal resource set. Specifically, one sample value refers to a measurement value corresponding to one uplink positioning reference signal resource or one uplink positioning reference signal resource set. Optionally or additionally, the downlink timestamp information includes: downlink timestamp information corresponding to a sample value of the downlink positioning reference signal, where the downlink positioning reference signal is used to calculate a positioning measurement value and generate a measurement report or a measurement instance; one sample value corresponds to one downlink positioning reference signal resource or one downlink positioning reference signal resource set. Specifically, one sample value refers to a measurement value corresponding to a downlink positioning reference signal resource or a downlink positioning reference signal resource set.

The third information may include at least one of: first association information between timestamp information and a TEG of the UE; second association information between timestamp information and a TEG of the network device. The first association information includes: a timestamp corresponding to a time instant when the TEG of the UE changes; the second association information includes: a timestamp corresponding to a time instant when the TEG of the network device changes; the TEG includes at least one of a transmitting TEG or a receiving TEG; the timestamp information includes: uplink timestamp information or downlink timestamp information.

In an embodiment of the present disclosure, the third information further includes: a TEG identity number before and after a first timestamp; or, a TEG index number before and after a first timestamp; where the first timestamp is a timestamp corresponding to a time instant when the TEG changes.

That "the TEG changes" refers to a TEG identity number or a TEG index number is updated.

In an embodiment of the present disclosure, the timing adjustment information includes: a timing adjustment value configured by the network device, or a timing adjustment value set by the UE; and the timing adjustment information refers to time adjustment information for adjusting the transmitting time instant of the uplink positioning reference signal.

The timing adjustment information may include: a timing adjustment value corresponding to each sample used to calculate a positioning measurement quantity.

Optionally, the fourth information includes: uplink timestamp information corresponding to a time instant when the timing adjustment information changes, and a changed amount for timing adjustment at the time instant when the change occurs or a timing adjustment value before and after the time instant when the change occurs; and that "the timing adjustment information changes" refers to the timing adjustment value of the uplink positioning reference signal transmitted by the UE is changed.

Furthermore, the information processing apparatus further includes: a first obtaining unit, configured to obtain sample values for transmission and reception time difference that have same timing adjustment information; a first processing unit, configured to obtain a transmission and reception time difference based on at least some of the obtained sample values; a third transmitting unit, configured to transmit the measurement value of transmission and reception time difference to the location management function server.

In an embodiment of the present disclosure, the information processing apparatus further includes a second determining unit, configured to: in a case that the communications device is the UE, determine that no timing adjustment has been performed on transmitting times of uplink positioning reference signals corresponding to all sample values used for calculating a measurement value of transmission and reception time difference of the UE; or, in a case that the communications device is the UE, determine that a same timing adjustment has been performed on transmitting times of uplink positioning reference signals corresponding to all sample values used for calculating a measurement value of transmission and reception time difference of the UE; or, in a case that the communications device is the gNB, determine that no timing adjustment has been performed on transmitting times of uplink positioning reference signals corresponding to all sample values used for calculating a measurement value of transmission and reception time difference of the gNB; or, in a case that the communications device is the gNB, determine that a same timing adjustment has been performed on transmitting times of uplink positioning reference signals corresponding to all sample values used for calculating a measurement value of transmission and reception time difference of the gNB.

In an embodiment of the present disclosure, the information processing apparatus further includes: a fourth transmitting unit, configured to transmit first indication information to the location management function server, where the first indication information is used to indicate whether there is a timing adjustment in a sample that is used by the communications device for calculating a measurement value of transmission and reception time difference; and/or, a fourth receiving unit, configured to receive second indication information transmitted by the location management function server, where the second indication information is used to indicate whether a timing adjustment is to be performed on a sample that is used by the communications device for calculating a measurement value of transmission and reception time difference.

It should be noted that the apparatus provided by the embodiment of the present disclosure can implement all the method steps implemented in the method embodiments which are applied to the communications device, and can achieve the same technical effects, and the descriptions and beneficial effects of which will not be repeated here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

An embodiment of the present disclosure further provides a processor readable storage medium, where the processor readable storage medium stores a computer program. The computer program is configured to cause a processor to execute the above information processing method applied to the location management function server. Alternatively, the computer program is configured to cause a processor to execute the above processing transmission method applied to the communications device.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

All of the embodiments of the information processing method implemented on the side of the location management function server or the communications device mentioned above are applicable to the embodiments of the processor readable storage medium, and can also achieve the same technical effects.

Those skilled in the art should appreciate that the embodiments of the present disclosure may be provided as a method, a system, or a computer program product. Therefore, the present disclosure may take the form of solely hardware embodiments, solely software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (digital signal processor, DSP), or one or more field programmable gate arrays (Field Programmable Gate Array, FPGA). As another example, when a module described above is implemented in the form of program codes called by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, OC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "include" and "have" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

**Claims**

1. An information processing method, applied to a location management function server, comprising:

    receiving timing related information transmitted by a communications device; and
    determining a position of user equipment (UE) based on the timing related information,
    wherein the communications device is the UE or a network device; the network device comprises a base station or a transmission and reception point (TRP); and
    the timing related information comprises at least one of:

        first time information associated with a transmitting time instant or a receiving time instant of an uplink positioning reference signal;
        second time information associated with a transmitting time instant or a receiving time instant of a downlink positioning reference signal;
        third information associated with a timing error group (TEG);
        timing adjustment information; and
        fourth information associated with the timing adjustment information.

2. The information processing method according to claim 1, wherein the first time information comprises uplink timestamp information, and the uplink timestamp information comprises: information on a subframe or a slot where the uplink positioning reference signal transmitted by the UE is located; and/or,
    the second time information comprises: downlink timestamp information, and the downlink timestamp information comprises: information on a subframe or a slot where the downlink positioning reference signal transmitted by the network device is located.

3. The information processing method according to claim 2, wherein the uplink timestamp information comprises: uplink timestamp information corresponding to a sample value of the uplink positioning reference signal, and one sample value corresponds to one uplink positioning reference signal resource or one uplink positioning reference signal resource set; and/or,
    the downlink timestamp information comprises: downlink timestamp information corresponding to a sample value of the downlink positioning reference signal, and one sample value corresponds to one downlink positioning reference signal resource or one downlink positioning reference signal resource set.

4. The information processing method according to claim 1, wherein the third information comprises at least one of:

    first association information between timestamp information and a TEG of the UE; and
    second association information between timestamp information and a TEG of the network device,

wherein the first association information comprises: a timestamp corresponding to a time instant when the TEG of the UE changes;

the second association information comprises: a timestamp corresponding to a time instant when the TEG of the network device changes;

the TEG comprises at least one of a transmitting TEG and a receiving TEG;

the timestamp information comprises: uplink timestamp information or downlink timestamp information.

5. The information processing method according to claim 4, wherein the third information further comprises: a TEG identity number before and after a first timestamp; or, a TEG index number before and after a first timestamp; and wherein the first timestamp is a timestamp corresponding to a time instant when the TEG changes.

6. The information processing method according to claim 4 or 5, wherein that the TEG changes comprises a TEG identity number or a TEG index number is updated.

7. The information processing method according to claim 1, wherein the timing adjustment information comprises: a timing adjustment value configured by the network device, or a timing adjustment value set by the UE; and wherein the timing adjustment information comprises time adjustment information for adjusting the transmitting time instant of the uplink positioning reference signal.

8. The information processing method according to claim 7, wherein the timing adjustment information comprises: a timing adjustment value corresponding to each of samples used to calculate a positioning measurement quantity.

9. The information processing method according to claim 1, wherein the fourth information comprises: uplink timestamp information corresponding to a time instant when the timing adjustment information changes, and a changed amount for timing adjustment at the time instant when the timing adjustment information changes or a timing adjustment value before and after the time instant when the timing adjustment information changes; and wherein that the timing adjustment information changes comprises a timing adjustment value of the uplink positioning reference signal transmitted by the UE is updated.

10. The information processing method according to claim 1, further comprising:

receiving a measurement value of transmission and reception time difference transmitted by the communications device;

wherein the determining the position of the UE based on the timing related information comprises:

determining the position of the UE based on the timing related information and the measurement value of transmission and reception time difference.

11. The information processing method according to claim 10, wherein the communications device is the user equipment (UE) or the base station (gNB);

the UE is expected that no timing adjustment has been performed on transmitting times of uplink positioning reference signals corresponding to all sample values used for calculating a measurement value of transmission and reception time difference of the UE; or,

the UE is expected that a same timing adjustment has been performed on transmitting times of uplink positioning reference signals corresponding to all sample values used for calculating a measurement value of transmission and reception time difference of the UE; or,

the gNB is expected that no timing adjustment has been performed on transmitting times of uplink positioning reference signals corresponding to all sample values used for calculating a measurement value of transmission and reception time difference of the gNB; or,

the gNB is expected that a same timing adjustment has been performed on transmitting times of uplink positioning reference signals corresponding to all sample values used for calculating a measurement value of transmission and reception time difference of the gNB.

12. The information processing method according to claim 1 or 10, further comprising:

receiving first indication information transmitted by the communications device, wherein the first indication information is used to indicate whether a timing adjustment has been performed on a sample that is used by the communications device for calculating a measurement value of transmission and reception time difference;

and/or,

transmitting second indication information to the communications device, wherein the second indication information is used to indicate whether a timing adjustment is to be performed on a sample that is used by the communications device for calculating a measurement value of transmission and reception time difference.

13. An information processing method, applied to a communications device, comprising:

transmitting timing related information to a location management function server, wherein the timing related information is used by the location management function server to determine a position of user equipment (UE); wherein the communications device is: the UE or a network device; the network device comprises a base station or a transmission and reception point (TRP); the timing related information comprises at least one of:

first time information associated with a transmitting time instant or a receiving time instant of an uplink positioning reference signal; second time information associated with a transmitting time instant or a receiving time instant of a downlink positioning reference signal; third information associated with a timing error group (TEG); timing adjustment information; and fourth information associated with the timing adjustment information.

14. The information processing method according to claim 13, wherein the first time information comprises uplink timestamp information, and the uplink timestamp information comprises: information on a subframe or a slot where the uplink positioning reference signal transmitted by the UE is located; and/or, the second time information comprises: downlink timestamp information, and the downlink timestamp information comprises: information on a subframe or a slot where the downlink positioning reference signal transmitted by the network device is located.

15. The information processing method according to claim 14, wherein the uplink timestamp information comprises: uplink timestamp information corresponding to a sample value of the uplink positioning reference signal, and one sample value corresponds to one uplink positioning reference signal resource or one uplink positioning reference signal resource set; and/or, the downlink timestamp information comprises: downlink timestamp information corresponding to a sample value of the downlink positioning reference signal, and one sample value corresponds to one downlink positioning reference signal resource or one downlink positioning reference signal resource set.

16. The information processing method according to claim 13, wherein the third information comprises at least one of:

first association information between timestamp information and a TEG of the UE; and second association information between timestamp information and a TEG of the network device, wherein the first association information comprises: a timestamp corresponding to a time instant when the TEG of the UE changes; the second association information comprises: a timestamp corresponding to a time instant when the TEG of the network device changes; the TEG comprises at least one of a transmitting TEG and a receiving TEG; the timestamp information comprises: uplink timestamp information or downlink timestamp information.

17. The information processing method according to claim 16, wherein the third information further comprises: a TEG identity number before and after a first timestamp; or, a TEG index number before and after a first timestamp; and wherein the first timestamp is a timestamp corresponding to a time instant when the TEG changes.

18. The information processing method according to claim 16 or 17, wherein that the TEG changes comprises a TEG identity number or a TEG index number is updated.

19. The information processing method according to claim 13, wherein the timing adjustment information comprises: a timing adjustment value configured by the network device, or a timing adjustment value set by the UE; and wherein the timing adjustment information comprises time adjustment information for adjusting the transmitting time instant of the uplink positioning reference signal.

20. The information processing method according to claim 19, wherein the timing adjustment information comprises: a timing adjustment value corresponding to each of samples used to calculate a positioning measurement quantity.

21. The information processing method according to claim 13, wherein the fourth information comprises: uplink timestamp information corresponding to a time instant when the timing adjustment information changes, and a changed amount for timing adjustment at the time instant when the timing adjustment information changes or a timing adjustment value before and after the time instant when the timing adjustment information changes; and
wherein that the timing adjustment information changes comprises a timing adjustment value of the uplink positioning reference signal transmitted by the UE is updated.

22. The information processing method according to claim 13, further comprising:

   obtaining sample values for transmission and reception time difference that have same timing adjustment information;
   obtaining a measurement value of transmission and reception time difference based on at least some of the obtained sample values; and
   transmitting the measurement value of transmission and reception time difference to the location management function server.

23. The information processing method according to claim 22, further comprising:

   in a case that the communications device is the UE, determining that no timing adjustment has been performed on transmitting times of uplink positioning reference signals corresponding to all sample values used for calculating a measurement value of transmission and reception time difference of the UE; or,
   in a case that the communications device is the UE, determining that a same timing adjustment has been performed on transmitting times of uplink positioning reference signals corresponding to all sample values used for calculating a measurement value of transmission and reception time difference of the UE; or,
   in a case that the communications device is the gNB, determining that no timing adjustment has been performed on transmitting times of uplink positioning reference signals corresponding to all sample values used for calculating a measurement value of transmission and reception time difference of the gNB; or,
   in a case that the communications device is the gNB, determining that a same timing adjustment has been performed on transmitting times of uplink positioning reference signals corresponding to all sample values used for calculating a measurement value of transmission and reception time difference of the gNB.

24. The information processing method according to claim 13, further comprising:

   transmitting first indication information to the location management function server, wherein the first indication information is used to indicate whether a timing adjustment has been performed on a sample that is used by the communications device for calculating a measurement value of transmission and reception time difference; and/or,
   receiving second indication information transmitted by the location management function server, wherein the second indication information is used to indicate whether a timing adjustment is to be performed on a sample that is used by the communications device for calculating a measurement value of transmission and reception time difference.

25. A location management function server, comprising a memory, a transceiver and a processor, wherein:
the memory is configured to store a computer program; the transceiver is configured to transmit and/or receive data under the control of the processor; the processor is configured to read the computer program from the memory to perform the following operations:

   receiving, by the transceiver, timing related information transmitted by a communications device; and
   determining a position of user equipment (UE) based on the timing related information,
   wherein the communications device is the UE or a network device; the network device comprises a base station or a transmission and reception point (TRP); and
   the timing related information comprises at least one of:

      first time information associated with a transmitting time instant or a receiving time instant of an uplink positioning reference signal;

second time information associated with a transmitting time instant or a receiving time instant of a downlink positioning reference signal;

third information associated with a timing error group (TEG);

timing adjustment information; and

fourth information associated with the timing adjustment information.

26. A communications device, comprising a memory, a transceiver and a processor, wherein:

the memory is configured to store a computer program; the transceiver is configured to transmit and/or receive data under the control of the processor; the processor is configured to read the computer program from the memory to perform the following operations:

transmitting, by the transceiver, timing related information to a location management function server, wherein the timing related information is used by the location management function server to determine a position of user equipment (UE);

wherein the communications device is: the UE or a network device; the network device comprises a base station or a transmission and reception point (TRP);

the timing related information comprises at least one of:

first time information associated with a transmitting time instant or a receiving time instant of an uplink positioning reference signal;

second time information associated with a transmitting time instant or a receiving time instant of a downlink positioning reference signal;

third information associated with a timing error group (TEG);

timing adjustment information; and

fourth information associated with the timing adjustment information.

27. The communications device according to claim 26, wherein the first time information comprises uplink timestamp information, and the uplink timestamp information comprises: information on a subframe or a slot where the uplink positioning reference signal transmitted by the UE is located; and/or,

the second time information comprises: downlink timestamp information, and the downlink timestamp information comprises: information on a subframe or a slot where the downlink positioning reference signal transmitted by the network device is located.

28. The communications device according to claim 26, wherein the third information comprises at least one of:

first association information between timestamp information and a TEG of the UE; and

second association information between timestamp information and a TEG of the network device,

wherein the first association information comprises: a timestamp corresponding to a time instant when the TEG of the UE changes;

the second association information comprises: a timestamp corresponding to a time instant when the TEG of the network device changes;

the TEG comprises at least one of a transmitting TEG and a receiving TEG;

the timestamp information comprises: uplink timestamp information or downlink timestamp information.

29. The communications device according to claim 26, wherein the timing adjustment information comprises: a timing adjustment value configured by the network device, or a timing adjustment value set by the UE; and

wherein the timing adjustment information comprises time adjustment information for adjusting the transmitting time instant of the uplink positioning reference signal.

30. The communications device according to claim 26, wherein the fourth information comprises: uplink timestamp information corresponding to a time instant when the timing adjustment information changes, and a changed amount for timing adjustment at the time instant when the timing adjustment information changes or a timing adjustment value before and after the time instant when the timing adjustment information changes; and

wherein that the timing adjustment information changes comprises a timing adjustment value of the uplink positioning reference signal transmitted by the UE is changed.

31. An information processing apparatus, applied to a location management function server, comprising:

a first receiving unit, configured to receive timing related information transmitted by a communications device; and
a first determination unit, configured to determine a position of user equipment (UE) based on the timing related information,
wherein the communications device is the UE or a network device; the network device comprises a base station or a transmission and reception point (TRP); and
the timing related information comprises at least one of:

first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information; and
fourth information associated with the timing adjustment information.

32. An information processing apparatus, applied to a communications device, comprising:

a second transmitting unit, configured to transmit timing related information to a location management function server, wherein the timing related information is used by the location management function server to determine a position of user equipment (UE);
wherein the communications device is: the UE or a network device; the network device comprises a base station or a transmission and reception point (TRP);
the timing related information comprises at least one of:

first time information associated with a transmitting time instant or a receiving time instant of an uplink positioning reference signal;
second time information associated with a transmitting time instant or a receiving time instant of a downlink positioning reference signal;
third information associated with a timing error group (TEG);
timing adjustment information; and
fourth information associated with the timing adjustment information.

33. A processor readable storage medium, wherein the processor readable storage medium stores a computer program, and the computer program is configured to enable a processor to execute the information processing method according to any one of claims 1 to 12; or,
the computer program is configured to enable a processor to execute the information processing method according to any one of claims 13 to 24.

Network device

Terminal device ⟷ Terminal device

FIG. 1

B      C      UE time

ε T$_1$      ε T$_2$

A      D      TRP time

FIG. 2

Receiving timing related information transmitted by a communications device      31

Determining a position of a terminal based on the timing related information; where the communications device is the terminal or a network device; the network device includes a base station or a transmission reception point (TRP); and the timing related information includes at least one of the following: first time information associated with a transmitting time instant or a receiving time instant of a uplink positioning reference signal; second time information associated with a transmitting time instant or a receiving time instant of a downlink positioning reference signal; third information associated with a timing error group (TEG); timing adjustment information; fourth information associated with timing adjustment information      32

FIG. 3

Transmitting timing related information to a location management function server, where the timing related information is used by the location management function server to determine a position of a terminal; a communications device is the terminal or a network device; the network device includes a base station or a transmission reception point (TRP); the timing related information includes at least one of the following: first time information associated with a transmitting time instant or a receiving time instant of a uplink positioning reference signal; second time information associated with a transmitting time instant or a receiving time instant of a downlink positioning reference signal; third information associated with a timing error group (TEG); timing adjustment information; fourth information associated with timing adjustment information

41

FIG. 4

Each of R1 to R4 is one SRS-Pos sample

| Subframe n | Subframe n+1 | Subframe n+2 |

R1  R2  R3  R4

UE    T1    T2    T3    T4    Time

FIG. 5

Each of R1 to R4 is one SRS-Pos sample

Subframe n    TEG1    Subframe n+1    Subframe n+2
                TEG2

R1    R2    R3    R4

UE    T1    T2    T5 T3    T4    Time

FIG. 6

FIG. 7

FIG. 8

FIG. 9

FIG. 10

FIG. 11

113

Processor

Bus interface

112

Transceiver

111

Memory

114

User interface

FIG. 12

131

First receiving unit

132

First determining unit

FIG. 13

141

Second transmitting unit

FIG. 14

## INTERNATIONAL SEARCH REPORT

| International application No. |
|---|
| **PCT/CN2022/098340** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 定位, 定时, 调整, 改变, 变化, 误差, 组, 时间戳, 时戳, SRS, PRS, position+, locat+, timing, LMF, TEG, TA, stamp, chang+, adjust+

**C.    DOCUMENTS CONSIDERED TO BE RELEVANT**

| Category* | Citation of document, with indication, where appropriate, of the relevant passages | Relevant to claim No. |
|---|---|---|
| X | QUALCOMM INC. "Enhancements on Timing Error Mitigations for improved Accuracy" *3GPP TSG RAN WG1 #106-e, R1-2107345*, 06 August 2021 (2021-08-06), sections 2-3.4 | 1-33 |
| A | OPPO. "Enhancement of timing-based positioning by mitigating UE Rx/Tx and/or gNB Rx/Tx timing delays" *3GPP TSG RAN WG1 #104-e, R1-2100128*, 18 January 2021 (2021-01-18), entire document | 1-33 |
| A | WO 2021187962 A1 (LG ELECTRONICS INC.) 23 September 2021 (2021-09-23) entire document | 1-33 |
| A | US 2020229016 A1 (QUALCOMM INC.) 16 July 2020 (2020-07-16) entire document | 1-33 |
| A | US 2020374728 A1 (QUALCOMM INC.) 26 November 2020 (2020-11-26) entire document | 1-33 |

☐ Further documents are listed in the continuation of Box C.    ☑ See patent family annex.

| *  Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 August 2022** | **14 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098340**

| Patent document cited in search report | | | Publication date (day/month/year) | Patent family member(s) | | | Publication date (day/month/year) |
|---|---|---|---|---|---|---|---|
| WO | 2021187962 | A1 | 23 September 2021 | None | | | |
| US | 2020229016 | A1 | 16 July 2020 | EP | 3909321 | A1 | 17 November 2021 |
| | | | | US | 2022248249 | A1 | 04 August 2022 |
| | | | | TW | 202033027 | A | 01 September 2020 |
| | | | | CN | 113273264 | A | 17 August 2021 |
| | | | | WO | 2020146837 | A1 | 16 July 2020 |
| US | 2020374728 | A1 | 26 November 2020 | WO | 2020236473 | A1 | 26 November 2020 |
| | | | | CN | 113826414 | A | 21 December 2021 |
| | | | | EP | 3973322 | A1 | 30 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111159770